# EUROPÄISCHE PATENTSCHRIFT

(11) **EP 3 242 755 B1**
(45) Veröffentlichungstag und Bekanntmachung des Hinweises auf die Patenterteilung: **10.08.2022**
(21) Anmeldenummer: 16706512.7
(22) Anmeldetag: 08.01.2016
(51) Int. Cl.: B21D 5/02, B21D 37/04, B21D 37/14

(54) **BESCHICKUNGSVORRICHTUNG FÜR EINE BIEGEPRESSE UND VERFAHREN ZUM BESCHICKEN EINER BIEGEPRESSE**
FEEDING DEVICE FOR A BENDING PRESS AND METHOD FOR FEEDING A BENDING PRESS
DISPOSITIF D'ALIMENTATION POUR PRESSE PLIEUSE ET PROCÉDÉ D'ALIMENTATION D'UNE PRESSE PLIEUSE

(30) Priorität: 08.01.2015 AT 500092015; 08.07.2015 AT 505982015
(43) Veröffentlichungstag der Anmeldung: 15.11.2017
(73) Patentinhaber: TRUMPF Maschinen Austria GmbH & Co. KG., 4061 Pasching (AT)
(72) Erfinder: DENKMEIER, Thomas, 4050 Traun (AT)
(74) Vertreter: Burger, Hannes
(86) Internationale Anmeldenummer: PCT/AT2016/050002
(87) Internationale Veröffentlichungsnummer: WO 2016/109862

(56) Entgegenhaltungen:
- EP-A1- 1 658 908
- EP-A1- 2 946 846
- JP-A- 2001 150 032
- JP-A- 2003 211 223
- JP-A- 2008 087 018

## Beschreibung

Die Erfindung betrifft eine Beschickungsvorrichtung, insbesondere Wechselvorrichtung, zum Beschicken einer Biegepresse mit Biegewerkzeugen und/oder zum Auswechseln von einem oder mehreren in einer Biegepresse eingesetzten Biegewerkzeugen, umfassend einen Werkzeugspeicher mit zumindest zwei, vorzugsweise einer Vielzahl von Führungsschienen zum Halten und Führen von Biegewerkzeugen und zumindest eine erste Transfereinrichtung zum Verschieben der Biegewerkzeuge entlang einer Führungsschiene. Die Erfindung betrifft auch ein Verfahren zum Beschicken einer Biegepresse mit zumindest einem ersten Biegewerkzeug aus einem Werkzeugspeicher einer Beschickungsvorrichtung.

Die CH668035A5 offenbart eine Biegepresse und einen Mechanismus zum Wechseln von Biegewerkzeugen. Biegewerkzeuge sind dabei in einer Speichervorrichtung jeweils an einem Haken aufgehängt. Das Wechseln erfolgt mittels eines um eine horizontale Schwenkachse drehbaren Tragarmes, der ein einzelnes Biegewerkzeug aufnimmt und von dem Werkzeugspeicher in die Biegepresse transferiert. Nachteilig an dieser Wechselvorrichtung ist, dass für die Bewegung des Tragarmes viel Raum zur Verfügung gestellt werden muss. Außerdem erfordert das Heranfahren und Verschwenken des Armes in Richtung der Werkzeughalterung der Biegepresse einen komplexen Bewegungsablauf. Zudem besteht hohe Kollisionsgefahr zwischen Tragarm und Teilen der Biegepresse einerseits und dem Werkzeugspeicher andererseits. Ein hoher Zeitaufwand beim Wechseln ergibt sich auch dadurch, dass die Biegewerkzeuge nur einzeln, d.h. nacheinander transferiert werden können.

Die EP2143506B1 offenbart eine Vorrichtung zum Austauschen und Montieren eines mehrteiligen Werkzeugs für eine Abkantpresse. Eine komplexe und raumfordernde Transfereinrichtung mit einem Greifer bzw. Haken entnimmt Biegewerkzeuge aus dem Werkzeugspeicher und verbringt sie in die Biegepresse. Die Transfereinrichtung ist zu diesem Zwecke vertikal und horizontal verfahrbar; der Haken zusätzlich rotierbar.

Die JP2003211223A, die die Basis für den Oberbegriff des Anspruchs 1 bildet, offenbart eine Vorrichtung zum Speichern und Austauschen von Biegewerkzeugen. Die hinter einer Biegemaschine angeordnete Vorrichtung umfasst eine Zone zum vorübergehenden Speichern von Biegewerkzeugen. Die Biegewerkzeuge werden über Schie nen, die einen 180° gebogenen Verlauf aufweisen, von der Speicherzone jeweils direkt zu dem oberen und unteren Werkzeughalter der Biegemaschine bewegt, während auf der gegenüberliegenden Seite synchron Biegewerkzeuge aus der Biegemaschine in die Speicherzone bewegt werden.

Verspätet eingereichte EP 2 946 846 A1 offenbart eine Werkzeugwechselvorrichtung für eine Abkantpresse.

Die sich aus dem Stand der Technik ergebenden Nachteile bestehen insbesondere in der aufwendigen und raumfordernden Gestaltung des Werkzeugspeichers und der Transfereinrichtung, die die Biegewerkzeuge von dem Werkzeugspeicher in die Biegepresse transferiert. Zu dem ist die Speicherkapazität der Werkzeugspeicher stark begrenzt bzw. erfordert ein solcher Werkzeugspeicher sehr viel Raum. Dies resultiert insbesondere daraus, dass (wie in der CH668035A5) für jedes Werkzeug eine gesonderte Haltestruktur, z.B. in Form eines Hakens, erforderlich ist bzw. dass (wie in beiden oben genannten Druckschriften) der Werkzeugspeicher ausreichend (Zwischen-)Raum für das Einfahren der Transfereinrichtung aufweisen muss. Das Wechseln von Werkzeugen ist mitunter sehr zeitaufwendig. Neben einer erhöhten Kollisionsgefahr der beweglichen Teile, insbesondere der Transfereinrichtung, ist der Kostenaufwand ein nachteiliger Faktor der bekannten Vorrichtungen.

Das Ziel der Erfindung besteht darin, diese Nachteile zu beseitigen bzw. zu entschärfen und eine Beschickungsvorrichtung bereitzustellen, die platzsparender dimensioniert werden kann und deren Werkzeugspeicher eine höhere Speicherdichte aufweist, d.h. eine höhere Anzahl von Biegewerkzeugen pro Raumeinheit beherbergen kann. Das Beschicken und Wechseln von Biegewerkzeugen soll auf einfache und zuverlässige Weise zu bewerkstelligen sein. Die Gefahr von Kollisionen soll reduziert, vorzugsweise gänzlich beseitigt werden. Die Beschickungseinrichtung und deren Betrieb sollen kostengünstiger werden.

Dieses Ziel wird mit einer Beschickungsvorrichtung der eingangs genannten Art erreicht durch eine Zwischenablage mit zumindest einer Führungsschiene zum Halten und Führen von Biegewerkzeugen, wobei der Werkzeugspeicher und die Zwischenablage relativ zueinander bewegbar sind und wobei zumindest eine Führungsschiene der Zwischenablage in verschiedenen Relativstellungen von Werkzeugspeicher und Zwischenablage jeweils mit einer anderen Führungsschiene des Werkzeugspeichers in fluchtender Ausrichtung steht.

Mit der erfindungsgemäßen Beschickungsvorrichtung ist es möglich, mehrere Biegewerkzeuge in einer Führungsschiene in einer Reihe hintereinander unterzubringen, wodurch die Speicherdichte des Werkzeugspeichers erhöht wird. Um nun aus dieser Reihe ein erstes Biegewerkzeug zu extrahieren bzw. zu vereinzeln, können Biegewerkzeuge vorübergehend in die Zwischenablage verschoben und dort (zwischen)gespeichert werden. Außerdem ermöglicht die Zwischenablage, dass Biegewerkzeuge von einer (bzw. einer ersten) Führungsschiene des Werkzeugspeichers in eine andere (bzw. zweite) Führungsschiene des Werkzeugspeichers verschoben werden können. Solche Rangiervorgänge erfolgen ausschließlich durch Verschiebevorgänge von Biegewerkzeugen entlang von Führungsschienen und Relativbewegung(en) zwischen Zwischenablage und Werkzeugspeicher.

Der große Vorteil der Erfindung besteht darin, dass die Biegewerkzeuge während des Rangiermanövers ununterbrochen in Führungsschienen eingesetzt bleiben (d.h. nicht aus den Führungsschienen entfernt werden müssen). Der Transfer eines Biegewerkzeuges von einer Führungsschiene (z.B. der Werkzeugspeichers) in eine andere Führungsschiene (z.B. der Zwischenablage) erfolgt dadurch, dass die beiden Führungsschienen in zueinander fluchtende Ausrichtung gebracht werden (wodurch ein durchgehender Führungsabschnitt entsteht) und durch Verschieben des Biegewerkzeuges von der einen Führungsschiene in die andere Führungsschiene. Zwischenschritte, die das Herausnehmen eines Biegewerkzeuges aus einer Führungsschiene und das Wiedereinsetzen beinhalten, sind aufgrund des erfindungsgemäßen Prinzips nicht erforderlich.

Um eine Relativbewegung (Verschiebung und/oder Drehung) zwischen Werkzeugspeicher und Zwischenablage zu verwirklichen, ist es möglich, den Werkzeugspeicher und/oder die Zwischenablage bewegbar auszubilden. Durch die Relativbewegung kann/können die Führungsschiene(n) der Zwischenablage mit verschiedenen Führungsschienen des Werkzeugspeichers in fluchtende Ausrichtung gelangen.

Durch die erfindungsgemäße Maßnahme kann einerseits der Beschickungsvorgang beschleunigt und effizienter gestaltet werden, andererseits erhöht sich die mögliche Speicherdichte von Biegewerkzeugen im Werkzeugspeicher.

Vorzugsweise sind die Führungsschienen des Werkzeugspeichers auf einem gemeinsamen Träger ausgebildet.

Bevorzugt wird, wenn die Beschickungsvorrichtung zumindest einen (Oberwerkzeug- )Werkzeugspeicher und eine - relativ zum Oberwerkzeugspeicher bewegbare - Zwischenablage für Oberwerkzeuge und zumindest einen (Unterwerkzeug-)Werkzeugspeicher und eine - relativ zum Unterwerkzeugspeicher bewegbare - Zwischenablage für Unterwerkzeuge aufweist. Oberwerkzeug- und Unterwerkzeugeinheiten der Beschickungsvorrichtung sind bevorzugt (und entsprechend der Anordnung der Werkzeughalterungen in einer Biegepresse) übereinander angeordnet.

Denkbar wäre auch ein dreidimensionaler Werkzeugspeicher in Art eines Regalsystems, bei dem die Zwischenablage in zwei Raumrichtungen relativ bewegbar wäre, um die einzelnen Führungsschienen des Werkzeugspeichers zu bedienen.

Eine bevorzugte Ausführungsform zeichnet sich dadurch aus, dass die Zwischenablage zumindest zwei Führungsschienen zum Halten und Führen von Biegewerkzeugen umfasst, wobei vorzugsweise eine Führungsschiene des Werkzeugspeichers in verschiedenen Relativstellungen von Werkzeugspeicher und Zwischenablage jeweils mit einer anderen Führungsschiene der Zwischenablage in fluchtender Ausrichtung steht. Diese Ausführungsform ermöglicht zusätzliche bzw. erweiterte Rangieroptionen: insbesondere das Verschieben eines Biegewerkzeuges entlang einer ersten Führungsschiene der Zwischenablage in die Führungsschiene (Werkzeughalterung) der Biegepresse, während gleichzeitig andere Biegewerkzeuge in einer anderen (bzw. zweiten) Führungsschiene der Zwischenablage zwischengespeichert werden.

Eine bevorzugte Ausführungsform zeichnet sich dadurch aus, dass die Führungsschienen des Werkzeugspeichers und/oder der Zwischenablage parallel zueinander verlaufen oder dass die Führungsschienen des Werkzeugspeichers und/oder der Zwischenablage entlang eines Kreisbogens oder einer Kreislinie in radialer Richtung verlaufend angeordnet sind. Solche Anordnungen erhöhen nicht nur die Speicherdichte, sondern ermöglichen die Verwirklichung einer Relativbewegung zwischen Werkzeugspeicher und Zwischenablage durch lineares Verschieben und/oder Drehen.

Eine bevorzugte Ausführungsform zeichnet sich dadurch aus, dass die Zwischenablage relativ zum Werkzeugspeicher quer zur Längserstreckung ihrer zumindest einen Führungsschiene verschiebbar ist. Die erforderlichen Verschiebungswege können dadurch minimiert werden. Die Zwischenablage bildet hier eine Art Schiebebühne.

In einer weiteren Ausführungsform kann die Zwischenablage eine Dreheinheit aufweisen, durch welche die Zwischenablage als Ganze oder eine Führungsschiene der Zwischenablage gedreht werden kann, z.B. um eine senkrecht zur Längserstreckung der jeweiligen Führungsschiene stehende Achse. Dadurch kann die Orientierung bzw. Reihenfolge der Biegewerkzeuge umgekehrt werden (z.B. bei einer Drehung um 180°).

Eine Ausführungsform besteht darin, dass die Führungsschienen des Werkzeugspeichers und die Führungsschiene(n) der dazugehörigen Zwischenablage in einer Ebene liegen. Es ist jedoch alternativ möglich, dass die Führungsschienen in verschiedenen Ebenen liegen und z.B. einen , vertikalen' Werkzeugspeicher bilden. In einer solchen Variante könnte die Zwischenablage die einzelnen Führungsschienen des Werkzeugspeichers in Art eines Paternosters anfahren.

Eine bevorzugte Ausführungsform zeichnet sich dadurch aus, dass der Werkzeugspeicher relativ zur Zwischenablage um eine Drehachse, die senkrecht zu der durch die zumindest zwei Führungsschienen des Werkzeugspeichers aufgespannten Ebene steht, drehbar ist. Dies ermöglicht eine einfache Konstruktion mit einem Drehantrieb.

In einer weiteren Ausführungsform ist die Zwischenablage relativ zum Werkzeugspeicher entlang einer kreisförmigen oder teilkreisförmigen Bahn bewegbar. Einer kreisförmigen Kontur des Werkzeugspeichers kann dadurch optimal entsprochen werden.

Eine bevorzugte Ausführungsform zeichnet sich dadurch aus, dass die Beschickungsvorrichtung zumindest eine zweite Transfereinrichtung zum Verschieben von Biegewerkzeugen umfasst, wobei die zweite Transfereinrichtung der Zwischenablage zugeordnet und vorzugsweise in der Zwischenablage integriert ist. Eine zweite Transfereinrichtung erweitert die Rangieroptionen, insbesondere wenn sie dazu ausgebildet ist, Biegewerkzeuge von der Zwischenablage zurück in den Werkzeugspeicher zu verschieben. So können Biegewerkzeuge mit der ersten Transfereinrichtung vom Werkzeugspeicher in die Zwischenablage und mit der zweiten Transfereinrichtung von der Zwischenablage in den Werkzeugspeicher verschoben werden.

Die zweite Transfereinrichtung kann ein Schiebeelement aufweisen, das durch einen Antrieb entlang der Führungsschiene(n) der Zwischenablage bewegbar ist. In einer bevorzugten Ausführungsform kann das Schiebeelement von seiner Antriebsstellung in eine neutrale Stellung zurückgezogen werden. In seiner neutralen Stellung kann das Schiebeelement nicht mit den in einer Führungsschiene des Zwischenablage geführten Biegewerkzeugen zusammenwirken.

Das Zurückziehen des Schiebeelementes ermöglicht einerseits den wahlweisen Einsatz der zweiten Transporteinrichtung und andererseits des Verfahren des Schiebeelements, ohne dabei ein Biegewerkzeug mitzubewegen; letzteres ermöglicht das 'Überholen' von Biegewerkzeugen.

In einer möglichen Ausführungsform ist die zweite Transfereinrichtung auf der Zwischenablage angeordnet und mit der Zwischenablage verfahrbar. In einer alternativen Ausführungsform könnte die zweite Transfereinrichtung relativ zur Zwischenablage stationär ausgebildet sein; sie könnte dann für verschiedene Führungsschienen verwendet werden, je nachdem welche Führungsschiene der Zwischenablage sich im Wirkbereich der zweiten Transfereinrichtung befindet.

Ebenfalls bevorzugt ist, wenn die Zwischenablage zumindest zwei zweite Transfereinrichtungen aufweist, wobei jede dieser (zweiten) Transfereinrichtungen einer anderen Führungsschiene der Zwischenablage zugeordnet ist.

Eine bevorzugte Ausführungsform zeichnet sich dadurch aus, dass die zweite Transfereinrichtung dazu eingerichtet ist, Biegewerkzeuge von der Zwischenablage in die (Werkzeughalterung der) Biegepresse zu verschieben.

Eine bevorzugte Ausführungsform zeichnet sich dadurch aus, dass der Bewegungsraum der zweiten Transfereinrichtung auf den Bereich der Zwischenablage beschränkt ist. Dadurch werden Kollisionen der zweiten Transfereinrichtung beim Relativbewegen zwischen Zwischenablage und Werkzeugspeicher von vornherein ausgeschlossen. Wenn die Transfereinrichtung bzw. deren Bewegungsraum bis ans Ende einer Führungsschiene der Zwischenablage reicht (z.B. durch einen mit den Biegewerkzeugen in Kontakt kommenden Schieber), so können trotzdem alle Biegewerkzeuge aus der Zwischenablage geschoben werden.

Eine bevorzugte Ausführungsform zeichnet sich dadurch aus, dass die zweite Transfereinrichtung einen Speicherantrieb, insbesondere einen Feder- oder Zylinder-Speicherantrieb, aufweist, der vorzugsweise durch Verschieben eines Biegewerkzeuges von einer Führungsschiene des Werkzeugspeichers in eine Führungsschiene der Zwischenablage beaufschlagbar ist. Das Betätigen des Speicherantriebs erfolgt über eine Steuereinrichtung, die z.B. eine Verriegelung löst, wodurch die gespeicherte Energie in eine Bewegung der Transfereinrichtung umgewandelt wird.

In einer alternativen Ausführungsform kann die zweite Transfereinrichtung einen aktiven Antrieb aufweisen. Ein solcher Antrieb ist jederzeit aktivierbar und durch eine externe Energieversorgung betätigbar. Der aktive Antrieb ist insbesondere ein (pneumatischer) Zylinder oder ein (servo-gesteuerter) Antrieb bzw. Motor. Der aktive Antrieb kann durch eine Steuereinrichtung angesteuert sein.

Eine bevorzugte Ausführungsform zeichnet sich dadurch aus, dass zumindest eine Führungsschiene des Werkzeugspeichers zumindest zwei, vorzugsweise eine Vielzahl von in einer Reihe angeordneten Biegewerkzeugen hält. Wie bereits erwähnt kann durch das "in-einer-Reihe Anordnen" von Biegewerkzeugen die Speicherdichte erhöht werden.

Eine bevorzugte Ausführungsform zeichnet sich dadurch aus, dass die Beschickungsvorrichtung eine Steuereinrichtung umfasst, die mit dem Antrieb der ersten Transfereinrichtung und mit einem Antrieb zum Relativbewegen von Werkzeugspeicher und Zwischenablage verbunden und eingerichtet ist, um einen Beschickungsvorgang, bei dem eine Biegepresse mit zumindest einem ersten Biegewerkzeug aus dem Werkzeugspeicher beschickt wird, zu steuern, wobei das zumindest eine erste Biegewerkzeug zusammen mit zumindest einem zweiten Biegewerkzeug in einer ersten Führungsschiene des Werkzeugspeichers in einer Reihe angeordnet ist und wobei das erste Biegewerkzeug von dem zumindest einen zweiten Biegewerkzeug mittels eines Rangiermanövers durch Verschieben entlang von Führungsschienen getrennt wird. Die Vorteile eines Rangiermanövers sowie das Rangiermanöver selbst werden weiter unten noch im Detail erläutert.

Eine bevorzugte Ausführungsform zeichnet sich dadurch aus, dass sich der Bewegungsraum der ersten Transfereinrichtung über zumindest eine Führungsschiene des Werkzeugspeichers und zumindest eine Führungsschiene der Zwischenablage erstreckt.

Eine bevorzugte Ausführungsform zeichnet sich dadurch aus, dass die erste Transfereinrichtung ein entlang der Führungsschiene verfahrbares, vorzugsweise in der Führungsschiene geführtes, Shuttle - insbesondere in Form eines Schlittens oder Wagens - umfasst.

Eine bevorzugte Ausführungsform zeichnet sich dadurch aus, dass die Transfereinrichtung ein längliches, vorzugsweise flexibles Zug- und/oder Druckübertragungsmittel, insbesondere ein Band, ein Seil, eine Stange oder eine Kette, umfasst, und dass das Shuttle an das Zug- und/oder Druckübertragungsmittel angebunden ist. Durch den Einsatz eines Zug- und/oder Druckübertragungsmittels kann der Verfahrantrieb der Transfereinrichtung fern der Werkzeughalterungen angeordnet werden. Die Transfereinrichtung kann dadurch außerdem gewichtsarm und platzsparend konzipiert werden. Das Übertragungsmittel kann zur Übertragung von Zugkräften oder Druckkräften oder Zug- und Druckkräften ausgebildet sein. Wenn die Beschickung bzw. das Wechseln der Biegewerkzeuge nur von einem Ende der Schiene aus erfolgt, kommt ein Zug- und Druckübertragungsmittel zum Einsatz.

Die Transfereinrichtung, insbesondere das Shuttle, weist vorzugsweise eine lösbare Kupplung zum Anbinden eines Biegewerkzeuges auf. Dadurch kann die Transfereinrichtung die Biegewerkzeuge nicht nur schieben, sondern auch ziehen. Die Kupplung weist eine freigebende (gelöste) Stellung und eine ankoppelnde Stellung auf und ist durch einen Aktuator betätigbar. Die Kupplung kann z.B. als mechanische Kupplung, magnetische Kupplung oder als Ansaugvorrichtung ausgebildet sein. Die Kupplung kann eine kraftschlüssige und/oder formschlüssige Verbindung mit dem Biegewerkzeug herstellen. Der Aktuator zum Betätigen der Kupplung kann eine Zylinder-Kolben-Einheit, einen Linearantrieb, einen Motor, eine Unterdruckeinrichtung und/oder eine elektromagnetische Einrichtung umfassen.

In einer alternativen Variante könnte das Shuttle auch selbstfahrend ausgebildet sein, wobei der Verfahrantrieb in oder an dem Shuttle angeordnet ist. Die Transfereinrichtung kann auf diese Weise besonders bauteilsparend konstruiert werden. Die Ansteuerung des Shuttles könnte drahtgebunden, aber auch per Funk erfolgen.

Eine bevorzugte Ausführungsform zeichnet sich dadurch aus, dass das Biegewerkzeug in der Führungsschiene durch dieselbe Führungsstruktur gehalten wird, durch den die Transfereinrichtung (z.B. Shuttle) geführt ist. Dies ist besonders vorteilhaft, da für die Transfereinrichtung keine gesonderte Führungsstruktur vorgesehen werden muss.

Das Biegewerkzeug wird beispielsweise durch vom Schaft des Biegewerkzeuges abragende Haltemittel, wie z.B. Stifte, Pins oder Leisten gehalten. Die Haltemittelragen in die Führungsstruktur der Führungsschiene, wodurch das Biegewerkzeug in der Schiene gehalten wird. Die Haltemittel können auch beweglich sein und z.B. durch ein Betätigungselement des Biegewerkzeuges (sog. Sicherheitsstifte) von einer haltenden in eine freigebende Stellung bewegt werden. Dies ermöglicht das Einsetzen der Biegewerkzeuge in einer Richtung quer zur Längserstreckung der Schiene, was aber gemäß dem vorliegenden erfindungsgemäßen Prinzip beim Beschicken bzw. Wechseln nicht erforderlich ist.

Die Führungsstruktur in den Führungsschienen kann auch dazu ausgebildet sein, um die Transfereinrichtung in der Schiene zu halten. Die innerhalb der Schiene ausgebildete Führungsstruktur besitzt zusätzlich zur Führungsfunktion entlang der Längserstreckung der Schiene eine Haltefunktion, indem sie die Transfereinrichtung in (oder innerhalb) der Schiene hält. Die Transfereinrichtung ist entlang der Führungsstruktur (d.h. parallel zur Längserstreckung der Schiene) verschiebbar und in der Richtung senkrecht zur Längserstreckung der Schiene (d.h. in der Richtung vom Schieneninneren zur Schienenöffnung hin) durch die Führungsstruktur gehalten. Die Führungsstruktur verhindert somit, dass die Transfereinrichtung aus der Schiene fällt bzw. herausspringt.

Werkzeugspeicher und Zwischenablage sind bevorzugt auf einem gemeinsamen Rahmen oder einer gemeinsamen Plattform gelagert, wobei der Werkzeugspeicher und/oder die Zwischenablage relativ zum Rahmen bewegbar sind (um in verschiedene Relativstellungen zueinander zu gelangen).

Eine bevorzugte Ausführungsform ist gekennzeichnet durch zumindest eine weitere Zwischenablage mit zumindest einer Führungsschiene zum Halten und Führen von Biegewerkzeugen. Durch die zumindest eine weitere (bzw. zweite) Zwischenablage können die Möglichkeiten des Rangierens von Biegewerkzeugen, insbesondere im Zusammenhang mit dem Extrahieren bzw. Umgruppieren von Biegewerkzeugen sowie dem Beschickungs- bzw. Wechselvorgang, erweitert werden. Die zumindest eine weitere Zwischenablage kann neben dem Werkzeugspeicher oder neben der (ersten) Zwischenablage angeordnet sein und von diesen - durch Verschieben entlang von Führungsschienen - Biegewerkzeuge aufnehmen.

An dieser Stelle sei erwähnt, dass alle Eigenschaften, die im Zusammenhang mit der (ersten) Zwischenablage beschrieben wurden, auch auf die zumindest eine weitere Zwischenablage übertragen werden können.

Zwei Zwischenablagen können auch nebeneinander angeordnet sein und gegeneinander bewegbar (z.B. verschiebbar) sein.

Eine bevorzugte Ausführungsform zeichnet sich dadurch aus, dass der Werkzeugspeicher und die zumindest eine weitere Zwischenablage relativ zueinander bewegbar sind und wobei zumindest eine Führungsschiene der weiteren Zwischenablage in verschiedenen Relativstellungen von Werkzeugspeicher und weiterer Zwischenablage jeweils mit einer anderen Führungsschiene des Werkzeugspeichers in fluchtender Ausrichtung steht. Die weitere (bzw. zweite) Zwischenablage kann somit ähnliche Funktionen übernehmen wie die erste Zwischenablage. Die Gesamtfunktionalität wird insbesondere durch die Möglichkeit des Zwischenlagerns von Biegewerkzeugen auf zumindest zwei Zwischenablagen deutlich erhöht.

Eine bevorzugte Ausführungsform zeichnet sich dadurch aus, dass zumindest ein Abschnitt des Werkzeugspeichers zwischen den Zwischenablagen angeordnet ist. Durch diese Maßnahme kann auf Biegewerkzeuge, die in einer Führungsschiene des Werkzeugspeichers hintereinander untergebracht sind, von zwei Seiten her zugegriffen werden. Auch Umgruppierungs- bzw. Vereinzelungsvorgänge werden dadurch wesentlich erleichtert. Dabei können die Zwischenablagen stationär sein, während der Werkzeugspeicher relativ zu den Zwischenablagen bewegbar ist; oder zumindest eine Zwischenablage kann bewegbar sein; oder es sind Werkzeugspeicher und Zwischenablegen bewegbar.

Eine bevorzugte Ausführungsform zeichnet sich dadurch aus, dass in zumindest einer Relativstellung von Werkzeugspeicher und Zwischenablagen durch eine Führungsschiene einer Zwischenablage, eine Führungsschiene des Werkzeugspeichers und eine Führungsschiene einer anderen Zwischenablage ein durchgehender Führungsabschnitt ausgebildet ist. Auf diese Weise kann ein Biegewerkzeug, auf das von einer (der Biegepresse abgewandten) Seite zugegriffen wird, durch den durchgehenden Führungsabschnitt hindurch in die Biegepresse gefördert bzw. transferiert werden.

Eine bevorzugte Ausführungsform zeichnet sich dadurch aus, dass der Werkzeugspeicher ringförmig ist und die Zwischenablage in dem vom ringförmigen Werkzeugspeicher umschlossenen Bereich angeordnet ist. Dies stellt eine besonders platzsparende Lösung dar.

Bevorzugt befindet sich die Parkposition der ersten Transfereinrichtung, insbesondere die Parkposition des, vorzugsweise komplett, eingefahrenen Shuttles (z.B. Schiebers), auf einer Zwischenablage.

Eine bevorzugte Ausführungsform zeichnet sich dadurch aus, dass eine Zwischenablage oder eine Führungsschiene der Zwischenablage drehbar ist. Die Biegewerkzeuge bzw. eine Reihe von Biegewerkzeugen können dadurch umorientiert werden, was den Zugriff auf ein bestimmtes Biegewerkzeug erleichtert und die erforderlichen Rangierschritte verringert.

Eine bevorzugte Möglichkeit besteht darin, dass die Zwischenablage insbesondere aus der gemeinsamen Ebene mit dem Werkzeugspeicher absenkbar oder hebbar ist. Die Drehung erfolgt dann in der abgesenkten bzw. gehobenen Stellung. Nach der Drehung wird die Zwischenablage wieder in die gemeinsame Ebene mit dem Werkzeugspeicher gebracht. Zwischenablage und/oder Werkzeugspeicher können selbstverständlich auch derart ausgebildet sein, dass eine Drehung der Zwischenablege auch in der gemeinsamen Ebene möglich ist.

Entsprechend einer bevorzugten Ausführungsform sind ein (Oberwerkzeug)Speicher und ein (Unterwerkzeug)Speicher auf zumindest zwei verschiedenen horizontalen Ebenen verteilt. Der Werkzeugspeicher und die Zwischenablage können zusätzlich eine relative vertikale Bewegungsmöglichkeit aufweisen, um die Zwischenablage mit dem entsprechenden Werkzeugspeicher auszurichten.

Es ist bevorzugt, wenn die Zwischenablage zumindest zwei Führungsschienen aufweist, die in zwei unterschiedlichen horizontalen Ebenen verlaufen.

Eine bevorzugte Ausführungsform zeichnet sich dadurch aus, dass in einer ersten Drehposition der Zwischenablage das eine Ende einer Führungsschiene der Zwischenablage an den Werkzeugspeicher grenzt und in einer zweiten Drehposition der Zwischenablage das andere Ende der Führungsschiene der Zwischenablage an den Werkzeugspeicher grenzt. Auf diese Weise kann der (zunächst dem Werkzeugspeicher abgewandte) Anfang einer Reihe von Biegewerkzeugen durch eine Drehung, insbesondere um 180°, dem Werkzeugspeicher zugewandt werden, und umgekehrt.

Eine bevorzugte Ausführungsform zeichnet sich dadurch aus, dass die Zwischenablage eine Dreheinheit aufweist, durch welche die Zwischenablage als Ganze oder eine Führungsschiene der Zwischenablage drehbar ist, vorzugsweise um eine senkrecht zur Längserstreckung einer Führungsschiene der Zwischenablage stehende Achse. Die Dreheinheit kann z.B. einen Drehantrieb umfassen.

Insbesondere im Zusammenhang mit letzteren Ausführungsformen kann das Rangiermanöver auch - Schritt (g) - ein Drehen der Zwischenablage um eine Drehachse (vorzugsweise um 180°) umfassen.

Das Ziel wird auch erreicht mit einer Anordnung einer Biegepresse und einer daran gekoppelten Beschickungsvorrichtung gemäß der vorliegenden Erfindung zum Beschicken der Biegepresse mit Biegewerkzeugen, wobei die Biegepresse eine als Führungsschiene ausgebildete Werkzeughalterung zum Halten und Führen von Biegewerkzeugen aufweist.

Eine bevorzugte Ausführungsform zeichnet sich dadurch aus, dass die Zwischenablage zwischen dem Werkzeugspeicher und der Biegepresse angeordnet ist. Die Gesamt-Verfahrstrecke aller Biegewerkzeuge, die während eines Beschickungs- oder Wechselvorganges bewegt werden, kann durch diese Maßnahme minimiert werden. Selbstverständlich wäre auch eine Anordnung denkbar, bei der der Werkzeugspeicher zwischen Biegepresse und Zwischenablage angeordnet ist.

Eine bevorzugte Ausführungsform zeichnet sich dadurch aus, dass die Zwischenablage relativ zur Werkzeughalterung der Biegepresse bewegbar ist, vorzugsweise quer zur Längserstreckung ihrer zumindest einen Führungsschiene verschiebbar ist. Dies ermöglicht das Beschicken der Biegepresse von verschiedenen Führungsschienen der Zwischenablage.

Eine bevorzugte Ausführungsform zeichnet sich dadurch aus, dass in zumindest einer Relativstellung von Zwischenablage und Werkzeugspeicher eine durchgängige Führung aus einer Führungsschiene des Werkzeugspeichers, einer Führungsschiene der Zwischenablage und der als Führungsschiene ausgebildeten Werkzeughalterung der Biegepresse gebildet wird. Dies ermöglicht das Verschieben von Biegewerkzeugen bis in die Werkzeughalterung der Biegepresse hinein mittels einer ersten Transfereinrichtung, die vorzugsweise ebenfalls in den Führungsschienen geführt ist.

Eine bevorzugte Ausführungsform zeichnet sich somit auch dadurch aus, dass sich der Bewegungsraum der ersten Transfereinrichtung über die Führungsschiene des Werkzeugspeichers, die Führungsschiene der Zwischenablage und die als Führungsschiene ausgebildete Werkzeughalterung der Biegepresse erstreckt.

Eine bevorzugte Ausführungsform zeichnet sich dadurch aus, dass der Werkzeugspeicher zwischen der Biegepresse und einer Zwischenablage angeordnet ist. Diese Zwischenablage ist dann der Biegepresse abgewandt, wodurch deren Zusammenwirken mit dem Werkzeugspeicher ungestört (von der Biegepresse) erfolgen kann. Auch wird im Bereich der Biegepresse kein Raum in Anspruch genommen.

Das Ziel der Erfindung wird auch erreicht mit einem Verfahren zum Beschicken einer Biegepresse mit zumindest einem ersten Biegewerkzeug aus einem Werkzeugspeicher einer Beschickungsvorrichtung, wobei der Werkzeugspeicher zumindest zwei Führungsschienen zum Halten und Führen von Biegewerkzeugen und die Biegepresse zumindest eine als Führungsschiene ausgebildete Werkzeughalterung umfasst, dadurch gekennzeichnet, dass das zumindest eine erste Biegewerkzeug zusammen mit zumindest einem zweiten Biegewerkzeug in einer ersten Führungsschiene des Werkzeugspeichers in einer Reihe angeordnet ist und dass das erste Biegewerkzeug von dem zumindest einen zweiten Biegewerkzeug mittels eines Rangiermanövers durch Verschieben (von Biegewerkzeugen) entlang von Führungsschienen getrennt wird.

Unter "erstem Biegewerkzeug" wird ein Biegewerkzeug verstanden, dass durch den Rangiervorgang aus der Reihe extrahiert wird, um in die Biegepresse verschoben zu werden. Unter "zweitem Biegewerkzeug" wird ein Biegewerkzeug verstanden, das während des Rangiermanövers in der Beschickungsvorrichtung verbleibt bzw. - wenn das Rangiermanöver unter Zuhilfenahme der (als Führungsschiene ausgebildeten) Werkzeughalterung der Biegepresse erfolgt - wieder in die Beschickungsvorrichtung zurückgeschoben wird, bevor der Biegevorgang mit dem ersten Biegewerkzeug gestartet wird.

Während des Rangiermanövers, welches das Verschieben des zumindest einen ersten Biegewerkzeuges in eine als Führungsschiene ausgebildete Werkzeughalterung der Biegepresse umfassen kann, verbleiben die an dem Rangiermanöver beteiligten Biegewerkzeuge (ununterbrochen) in Führungsschienen eingesetzt. Unter dem "Trennen eines ersten Biegewerkzeuges von dem zumindest einen zweiten Biegewerkzeug" wird verstanden, dass das zumindest eine erste Biegewerkzeug aus der anfänglichen Reihe von Biegewerkzeugen extrahiert bzw. vereinzelt wird. Die anfängliche Reihe aus hintereinander angeordneten Biegewerkzeugen wird aufgelöst bzw. "aufgerissen", um Zugang zum ersten Biegewerkzeug zu erhalten.

Wie bereits erwähnt bleiben Biegewerkzeuge während des Rangiermanövers ununterbrochen in Führungsschienen eingesetzt. Der Transfer eines Biegewerkzeuges von einer Führungsschiene (z.B. der Werkzeugspeichers) in eine andere Führungsschiene (z.B. einer Zwischenablage oder Biegepresse) erfolgt dadurch, dass die beiden Führungsschienen in zueinander fluchtende Ausrichtung gebracht werden (wodurch ein durchgehender Führungsabschnitt entsteht) und durch Verschieben des Biegewerkzeuges von der einen Führungsschiene in die andere Führungsschiene. Mit dem erfindungsgemäßen Verfahren ist es möglich, mehrere Biegewerkzeuge in einer Führungsschiene des Werkzeugspeichers in einer Reihe hintereinander unterzubringen, wodurch die Speicherdichte des Werkzeugspeichers erhöht wird.

Eine bevorzugte Ausführungsform zeichnet sich dadurch aus, dass das Rangiermanöver mit zumindest einer entlang der Führungsschienen verfahrbaren Transfereinrichtung erfolgt, wobei vorzugsweise die Transfereinrichtung in den Führungsschienen geführt ist.

Eine bevorzugte Ausführungsform zeichnet sich dadurch aus, dass das Rangiermanöver die Schritte: (a) Verschieben zumindest eines Biegewerkzeuges von der ersten Führungsschiene des Werkzeugspeichers auf eine Führungsschiene einer Zwischenablage und (b) Relativbewegung zwischen Werkzeugspeicher und Zwischenablage umfasst. Um aus der anfänglichen Reihe von Biegewerkzeugen ein erstes Biegewerkzeug zu extrahieren bzw. zu vereinzeln, können Biegewerkzeuge vorübergehend in die Zwischenablage verschoben und dort (zwischen)gespeichert werden. Solche Rangiervorgänge erfolgen ausschließlich durch Verschiebevorgänge von Biegewerkzeugen entlang von Führungsschienen und Relativbewegung(en) zwischen Zwischenablage und Werkzeugspeicher. Außerdem ermöglicht die Zwischenablage, dass Biegewerkzeuge von einer (bzw. einer ersten) Führungsschiene des Werkzeugspeichers in eine andere (bzw. zweite) Führungsschiene des Werkzeugspeichers verschoben werden können.

Die Schritte (a) und (b) stellen das grundlegende Prinzip dieser Ausführungsform dar und können (beliebig) oft wiederholt werden. Eine bevorzugte Ausführungsform zeichnet sich dadurch aus, dass der Schritt (a) nach dem Schritt (b) zumindest einmal widerholt wird.

Der zumindest eine Schritt (a) erfolgt bevorzugt mit der (bereits weiter oben erwähnten) ersten Transfereinrichtung.

In einem oder mehreren weiteren Schritt(en) können Biegewerkzeuge von der Zwischenablage in den Werkzeugspeicher verschoben werden. Dies erfolgt bevorzugt mittels der (bereits weiter oben erwähnten) zweiten Transfereinrichtung.

Eine bevorzugte Ausführungsform zeichnet sich dadurch aus, dass im Schritt (a) die in der ersten Führungsschiene angeordneten Biegewerkzeuge in Richtung Zwischenablage verschoben werden, bis das/die vor dem zumindest einen ersten Biegewerkzeug angeordneten zweite(n) Biegewerkzeug(e) in der Führungsschiene der Zwischenablage ist/sind, und dass nach dem Schritt (b) das zumindest eine erste Biegewerkzeug in einem Schritt (c) von der ersten Führungsschiene des Werkzeugspeichers in eine Führungsschiene der Zwischenablage verschoben wird. Der Trennvorgang ist hier besonders einfach. Im Schritt (c) wird vorzugsweise nur das zumindest eine erste Biegewerkzeug in eine Führungsschiene der Zwischenablage verschoben, während allfällige zweite Biegewerkzeuge, die erst hinter dem ersten Biegewerkzeug angeordnet sind bleiben zunächst noch in der ersten Führungsschiene des Werkzeugspeichers (und werden z.B. erst später in einem Schritt (d) auf die Zwischenablage verschoben).

Eine bevorzugte Ausführungsform zeichnet sich dadurch aus, dass zwischen dem Schritt (b) und dem Schritt (c) die in der Zwischenablage zwischengelagerten zweiten Biegewerkzeuge in zumindest eine zweite Führungsschiene des Werkzeugspeichers verschoben werden. Diese Variante eignet sich insbesondere, wenn die Zwischenablage nur eine Führungsschiene aufweist, kann jedoch grundsätzlich auch bei Zwischenablagen mit mehreren Führungsschienen angewandt werden.

Eine bevorzugte Ausführungsform zeichnet sich dadurch aus, dass im Schritt (a) das/die zweite(n) Biegewerkzeug(e) in eine erste Führungsschiene der Zwischenablage verschoben werden und im Schritt (c) das zumindest eine erste Biegewerkzeug in eine zweite Führungsschiene der Zwischenablage verschoben wird. Dies stellt ein bevorzugtes Rangiermanöver dar, da mit nur wenigen Schritten eine Trennung des ersten Biegewerkzeuges erfolgt.

Eine bevorzugte Ausführungsform zeichnet sich dadurch aus, dass das Rangiermanöver den Schritt: (d) Verschieben des/der zweiten Biegewerkzeuge(s), das/die hinter dem zumindest einen ersten Biegewerkzeug angeordnet ist/sind, in die erste Führungsschiene der Zwischenablage, vorzugsweise bevor das zumindest eine erste Biegewerkzeug in die Werkzeughalterung der Biegepresse verschoben wird. Dieser Vorgang ist insbesondere dann vorteilhaft, wenn die erste Transfereinrichtung die Biegewerkzeuge von dem Werkzeugspeicher in Richtung Zwischenablage und in weiterer Folge in Richtung Biegepresse schiebt. In dieser Ausführungsform werden somit auch die hinteren zweiten Biegewerkzeuge abgetrennt und zwischengespeichert; das erste Biegewerkzeug ist nun vereinzelt und kann mit der ersten Transfereinrichtung in die Biegepresse verschoben werden.

Eine bevorzugte Ausführungsform zeichnet sich dadurch aus, dass durch Schritt (b) die Führungsschiene der Zwischenablage in fluchtende Ausrichtung mit einer anderen Führungsschiene des Werkzeugspeichers gelangt. So können auf einfache Weise und unter Vermittlung der Zwischenablage Biegewerkzeuge von einer Führungsschiene des Werkzeugspeichers in eine andere Führungsschiene verbracht werden.

Eine bevorzugte Ausführungsform zeichnet sich dadurch aus, dass durch Schritt (b) eine zweite Führungsschiene der Zwischenablage in fluchtende Ausrichtung mit der ersten Führungsschiene des Werkzeugspeichers gelangt. So können verschiedene Werkzeuge der anfänglichen Reihe von Biegewerkzeugen (in der ersten Führungsschiene des Werkzeugspeichers) in verschiedene Führungsschienen der Zwischenablage verschoben werden. Das Extrahieren oder das Um-Reihen der Biegewerkzeuge kann dadurch wesentlich schneller erfolgen.

Eine bevorzugte Ausführungsform zeichnet sich dadurch aus, dass während des Verschiebens des zumindest einen ersten Biegewerkzeuges in die Werkzeughalterung der Biegepresse eine durchgängige Führung aus einer Führungsschiene des Werkzeugspeichers, einer Führungsschiene der Zwischenablage und der als Führungsschiene ausgebildeten Werkzeughalterung der Biegepresse gebildet wird.

Eine bevorzugte Ausführungsform zeichnet sich dadurch aus, dass mehrere Biegewerkzeuge durch Rangiervorgänge in einer vorgegebenen Reihenfolge in einer Führungsschiene einer Zwischenablage, die relativ zum Werkzeugspeicher bewegbar ist, zusammengestellt werden, bevor sie in die Werkzeughalterung der Biegepresse geschoben werden. Diese Zusammenstellung kann zeitlich parallel zu einem Biegevorgang erfolgen, sodass die Auswahl bzw. das Sortieren der Werkzeuge keinen Einfluss auf die Taktzeiten hat.

Eine weitere Ausführungsform zeichnet sich dadurch aus, dass die (anfänglich) in einer ersten Führungsschiene des Werkzeugspeichers in einer Reihe angeordneten Biegewerkzeuge einzeln und oder in Gruppen durch ein Rangiermanöver über die Zwischenablage in unterschiedliche Führungsschienen des Werkzeugspeichers verbracht werden, wobei vorzugsweise jedes einzelne Biegewerkzeug in eine gesonderte Führungsschiene des Werkzeugspeichers gelangt.

Eine weitere Ausführungsform zeichnet sich dadurch aus, dass die Reihenfolge von in einer Führungsschiene angeordneten Biegewerkzeugen durch ein Rangiermanöver verändert wird.

Eine bevorzugte Ausführungsform zeichnet sich dadurch aus, dass das Rangiermanöver den Schritt umfasst: (e) Verschieben zumindest eines Biegewerkzeuges von einer Führungsschiene des Werkzeugspeichers oder von einer Führungsschiene der Zwischenablage auf eine Führungsschiene einer weiteren Zwischenablage. Das Einbeziehen einer weiteren Zwischenablage erweitert die Rangiermöglichkeiten und verringert dadurch die Anzahl an erforderlichen Zwischenschritten zum Extrahieren und Beschicken von Biegewerkzeugen.

Eine bevorzugte Ausführungsform zeichnet sich dadurch aus, dass das Rangiermanöver den Schritt umfasst: (f) Verschieben zumindest eines Biegewerkzeuges von einer Führungsschiene einer Zwischenablage durch eine Führungsschiene des Werkzeugspeichers auf eine Führungsschiene einer anderen Zwischenablage. Dies ermöglicht den Zugriff auf ein Biegewerkzeug auch von einer der Biegepresse abgewandten Seite. Auf dem Werkzeugspiecher wird zu diesem Zweck eine Führungsschiene (zumindest vorübergehend) freigehalten, um einen solchen Transfervorgang durchführen zu können. Zum besseren Verständnis der Erfindung wird diese anhand der nachfolgenden Figuren näher erläutert.

Es zeigen jeweils in stark vereinfachter, schematischer Darstellung:
- Fig. 1: eine Anordnung aus einer Biegepresse und eine daran angekoppelten Beschickungsvorrichtung gemäß vorliegender Erfindung;
- Fig. 2: eine Beschickungsvorrichtung, deren Werkzeugspeicher mit ersten und zweiten Biegewerkzeugen gefüllt ist;
- Fig. 3: die Beschickungsvorrichtung aus Fig. 2 mit vereinzelten ersten Biegewerkzeugen;
- Fig. 4 bis 10: einzelne Schritte eines Rangiermanövers zum Vereinzeln von Biegewerkzeugen;
- Fig. 11 bis 18: einzelne Schritte eines Rangiermanövers zum Trennen eines ersten Biegewerkzeuges von zweiten Biegewerkzeugen;
- Fig. 19: eine Variante einer Beschickungsvorrichtung mit zwei Transfereinrichtungen;
- Fig. 20 bis 22: eine Variante einer Beschickungsvorrichtung in verschiedenen Stellungen;
- Fig. 23: eine weitere Variante einer Beschickungsvorrichtung;
- Fig. 24: eine Ausführungsform einer Beschickungsvorrichtung;
- Fig. 25: eine in einer Führungsschiene verlaufende Transfereinrichtung aus Zug- und/oder Druckübertragungsmittel und Shuttle, das mittels einer Kupplung an ein (Ober-)Werkzeug angekoppelt ist;
- Fig. 26: eine Biegepresse;
- Fig. 27: die Beschickungsvorrichtung aus Fig. 24 von oben;
- Fig. 28: eine Beschickungsvorrichtung mit linear verschiebbarem Werkzeugspeicher und zwei Zwischenablagen;
- Fig. 29: die Beschickungsvorrichtung aus Fig. 28 von oben;
- Fig. 30: eine Beschickungsvorrichtung mit drehbarer Zwischenablage.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Ordnung halber sei abschließend darauf hingewiesen, dass zum besseren Verständnis des Aufbaus einer Beschickungsvorrichtung diese bzw. deren Bestandteile teilweise unmaßstäblich und/oder vergrößert und/oder verkleinert dargestellt wurden.

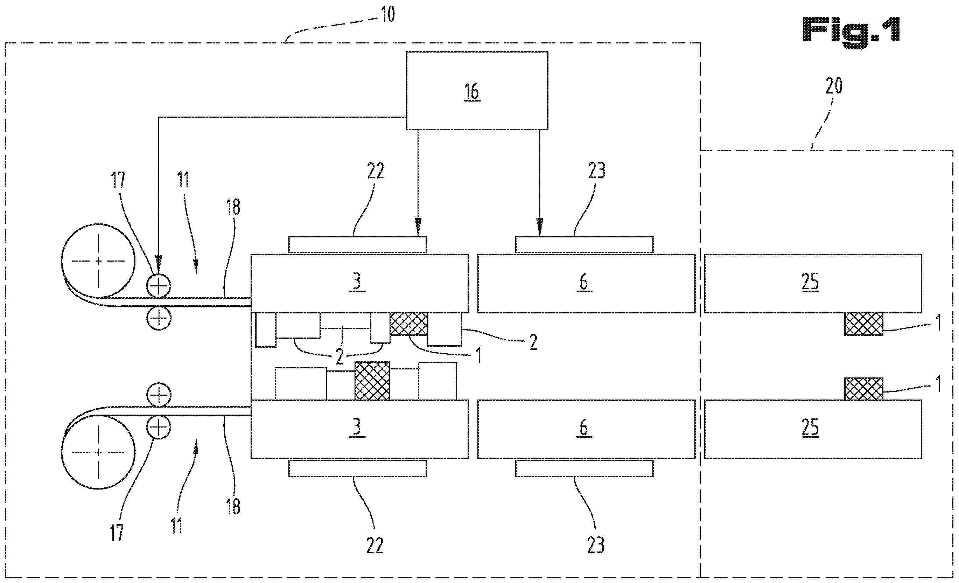

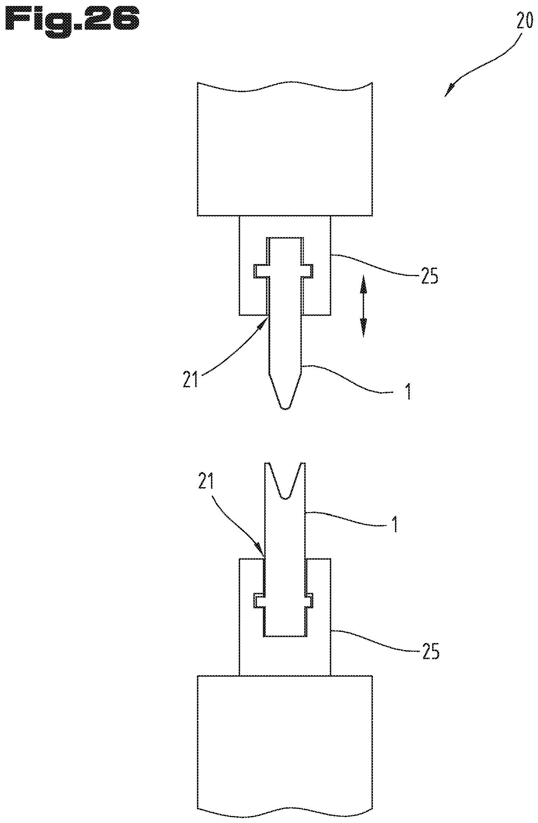

Fig. 1 zeigt eine Anordnung einer Biegepresse 20 und einer daran gekoppelten Beschickungsvorrichtung 10 zum Beschicken der Biegepresse 20 mit Biegewerk-zeugen 1, 2. Die Biegepresse 20 weist für das Ober- und Unterwerkzeug jeweils eine als Führungsschiene 21 ausgebildete Werkzeughalterung 25 zum Halten und Führen von Biegewerkzeugen 1, 2 auf. Eine solche Biegepresse 20 mit in die Führungsschienen 21 eingesetzten Biegewerkzeugen 1 ist auch in Fig. 26 abgebildet. Die Werkzeughalterungen 25 sind aufeinander zu bewegbar, um den Biegevorgang durchzuführen.

Die Beschickungsvorrichtung 10, insbesondere Wechselvorrichtung, dient zum Beschicken einer Biegepresse 20 mit Biegewerkzeugen 1 und/oder zum Aus-wechseln von einem oder mehreren in einer Biegepresse 20 eingesetzten Biegewerkzeugen.

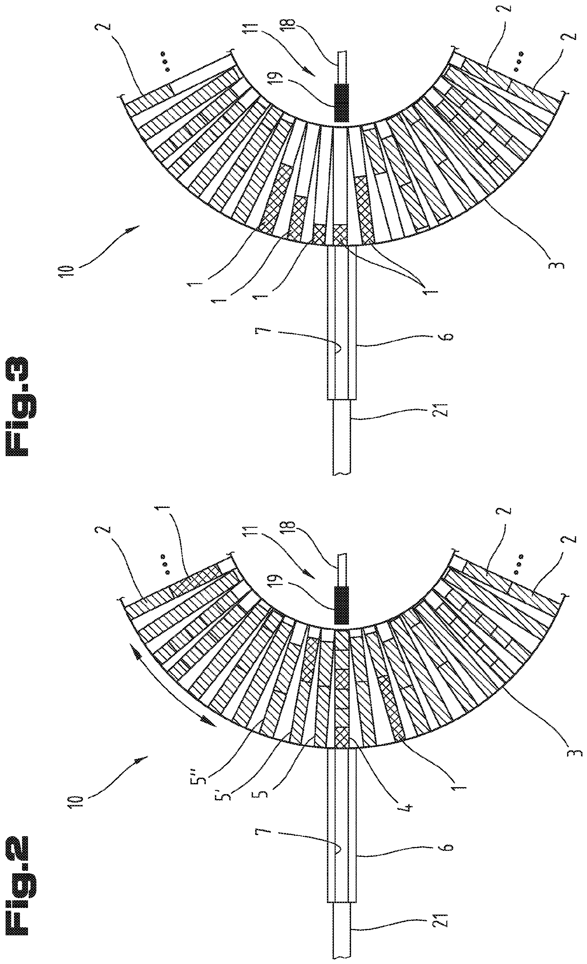

Die Beschickungsvorrichtung 10 umfasst einen Werkzeugspeicher 3 mit zumindest zwei, vorzugsweise einer Vielzahl von Führungsschienen 4, 5, 5', 5", 15 (siehe Fig. 2 bis 4) zum Halten und Führen von Biegewerkzeugen 1, 2. Erste Biegewerkzeuge 1 bezeichnen Biegewerkzeuge, die durch ein Rangiermanöver aus der Reihe von Biegewerkzeugen 1, 2 herausgelöst werden sollen, und sind durch eine gekreuzte Schraffur hervorgehoben.

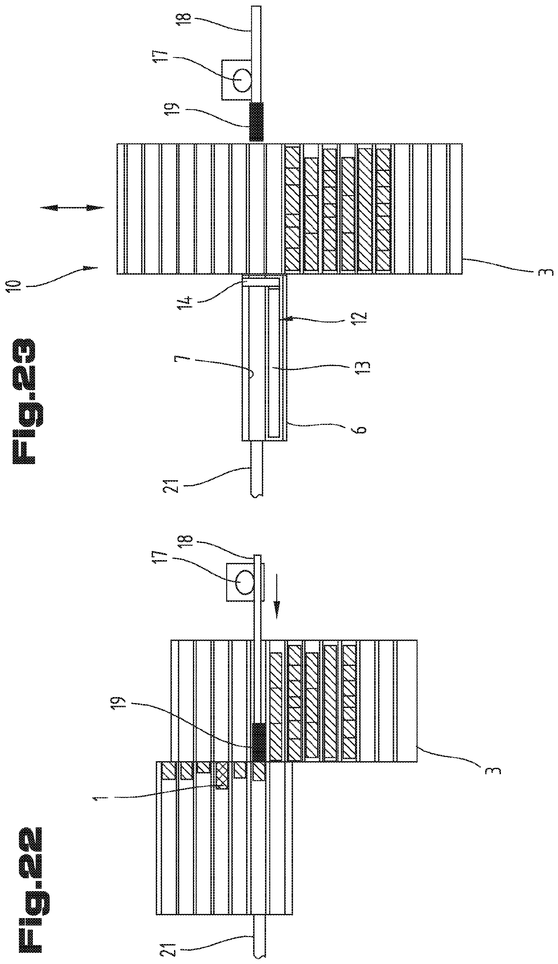

Die Beschickungsvorrichtung 10 umfasst auch eine Zwischenablage 6 mit zumindest einer Führungsschiene 7, 8 (siehe Fig. 2, 11 und 20) zum Halten und Führen von Biegewerkzeugen 1, 2. Der Werkzeugspeicher 3 und die Zwischenablage 6 sind relativ zueinander bewegbar. In dem Ausführungsbeispiel gemäß Fig. 1 sind Werkzeugspeicher 3 und Zwischenablage 6 in einer Richtung senkrecht zur Zeichenebene relativ zueinander verschiebbar. Ein (nur schematisch dargestellter) Antrieb 22 bewegt den Werkzeugspeicher 3 und ein (ebenfalls nur schematisch dargestellter) Antrieb 23 bewegt die Zwischenablage 6. An dieser Stelle sei erwähnt, dass es nicht unbedingt nötig ist, dass sowohl Werkzeugspeicher 3 und Zwischenablage 6 bewegbar sind. Es sind durchaus Lösungen denkbar, bei denen nur der Werkzeugspeicher oder nur die Zwischenablage bewegbar (insbesondere verschiebbar oder drehbar) sind; siehe z.B. Fig. 2 und 23. Die Antriebe 22 und/oder 23 können z.B. pneumatische Antriebe sein. Denkbar wären auch (Linear-)Motoren, Kettenantriebe und dgl.

Dabei steht zumindest eine Führungsschiene 7, 8 der Zwischenablage 6 in verschiedenen Relativstellungen von Werkzeugspeicher 3 und Zwischenablage 6 jeweils mit einer anderen Führungsschiene 4, 5, 5', 5", 15 des Werkzeugspeichers 3 in fluchtender Ausrichtung.

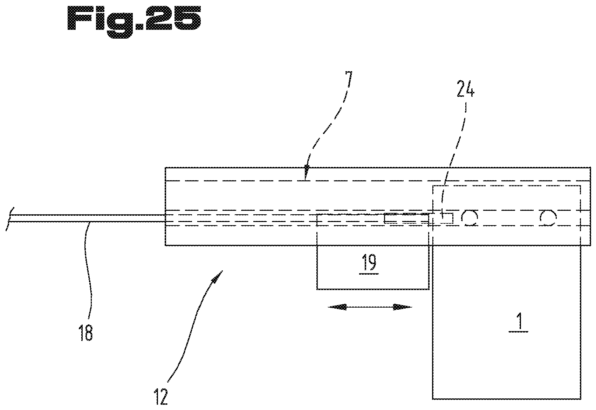

Die Beschickungsvorrichtung weist zumindest eine erste Transfereinrichtung 11 zum Verschieben der Biegewerkzeuge 1, 2 entlang einer Führungsschiene 4, 5, 7, 8, 21 auf. Im dargestellten Ausführungsbeispiel weist die erste Transfereinrichtung 11 einen Shuttle 19 (in Fig. 25 dargestellt) mit einer lösbaren Kupplung 24 zum temporären Anbinden eines Biegewerkzeuges auf.

Das Shuttle 19 ist entlang der Führungsschienen verfahrbar, vorzugsweise in der Führungsschiene (siehe Fig. 25) geführt. Das Shuttle 19 ist mit einem länglichen Zug- und/oder Druckübertragungsmittel 18 verbunden, das von einem Antrieb 17 angetrieben wird. In einer alternativen Variante könnte das Shuttle 19 selbstfahrend ausgebildet sein.

Der Bewegungsraum der ersten Transfereinrichtung 11 (hier: der Aktionsradius des Shuttle 19) erstreckt sich über zumindest eine Führungsschiene 4, 5 des Werkzeugspeichers 3 und zumindest eine Führungsschiene 7, 8 der Zwischenablage 6.

Fig. 2 und Fig. 3 zeigen ein Ausführungsbeispiel einer Beschickungsvorrichtung 10. Die Führungsschienen 4, 5, 5', 5" des Werkzeugspeichers 3 sind entlang eines Kreisbogens bzw. einer Kreislinie in radialer Richtung verlaufend angeordnet. Der Werkzeugspeicher 3 ist um eine (senkrecht zur Zeichenebene bzw. senkrecht zu der durch die Führungsschienen des Werkzeugspeichers aufgespannten Ebene stehende) Drehachse drehbar.

Die Führungsschienen 4, 5, 5', 5" des Werkzeugspeichers 3 halten jeweils mehrere von in einer Reihe angeordneten Biegewerkzeugen 1, 2 (Fig. 2). Die ersten Biegewerkzeuge 1 sind jene, mit denen die Biegepresse 20 beschickt werden soll. Sie müssen daher von den zweiten Biegewerkzeugen 2 getrennt werden (Fig. 3). Dies erfolgt gemäß Erfindung mittels eines Rangiermanövers durch Verschieben von Biegewerkzeugen entlang von Führungsschienen. In den folgenden Figuren sind zur leichteren Unterscheidbarkeit die ersten Biegewerkzeuge 1 jeweils durch eine gekreuzte Schraffur und die zweiten Biegewerkzeuge 2 durch eine einfache Schraffur gekennzeichnet.

Die im Folgenden verwendeten Ausdrücke "erste Führungsschiene", "zweite Führungsschiene" und "Abstell-Führungsschiene" sollen das Verständnis der Erfindung erleichtern. Insbesondere soll dadurch veranschaulicht werden, dass unterschiedliche Führungsschienen an einem Rangiermanöver beteiligt sein können und dass Biegewerkzeuge von einer Führungsschiene in eine andere Führungsschiene verbracht werden. Es ist durchaus möglich und bevorzugt, wenn alle Führungsschienen gleichartig ausgebildet sind.

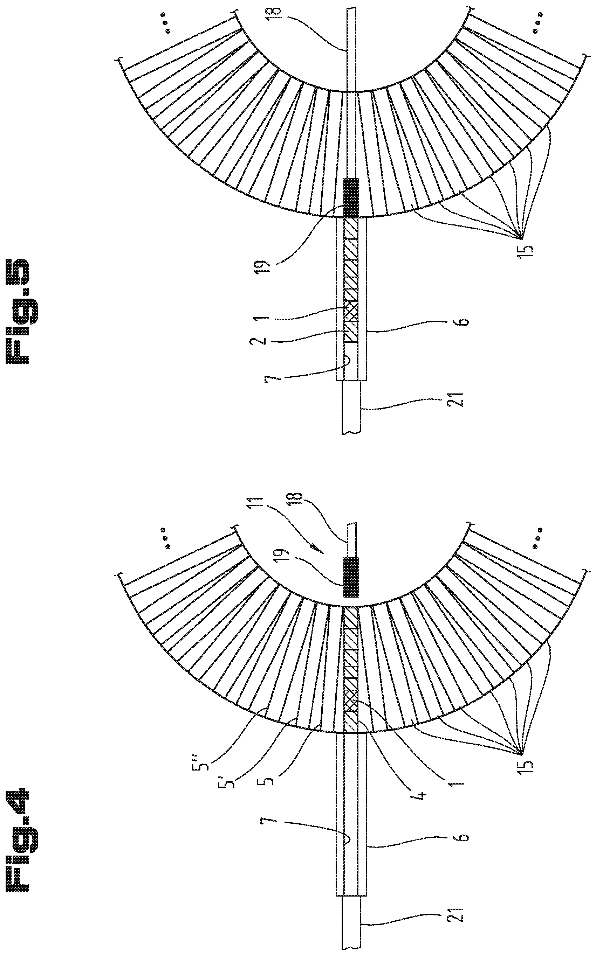

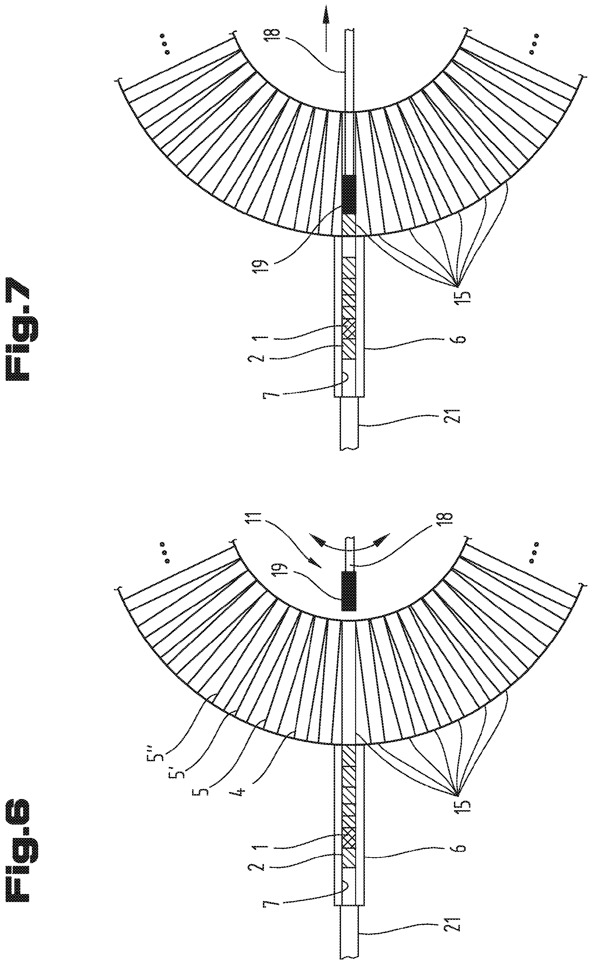

Die Fig. 4 bis 10 zeigen in einzelnen Schritten wie Biegewerkzeuge, die in einer Führungsschiene in einer Reihe hintereinander angeordnet sind, voneinander getrennt werden. Fig. 4 zeigt die Ausgangslage, in der Biegewerkzeuge 1, 2 in einer ersten Führungsschiene 4 gelagert sind. Die erste Führungsschiene 4 fluchtet mit der Führungsschiene 7 der Zwischenablage. Die Führungsschienen 15 sind (noch) leer und dienen in weiterer Folge als "Abstellgleise". Zuerst wird die gesamte Reihe mittels erster Transfereinrichtung 11 in die Führungsschiene 7 der Zwischenablage verschoben (Fig. 5). Nach die Transfereinrichtung wieder in ihre Ausgangslage (wie in Fig. 4) zurückgefahren ist, wird der Werkzeugspeicher (im Uhrzeigersinn) gedreht, sodass nun eine der Abstell-Führungsschienen 15 mit der Führungsschiene 7 fluchtet (Fig. 6). Die erste Transfereinrichtung 11 fährt in besagte Abstell-Führungsschiene 15, um an das hinterste der in der Zwischenablage 6 gelagerten Biegewerkzeuge anzukoppeln und dieses in die Abstell-Führungsschiene 15 zu ziehen (Fig. 7).

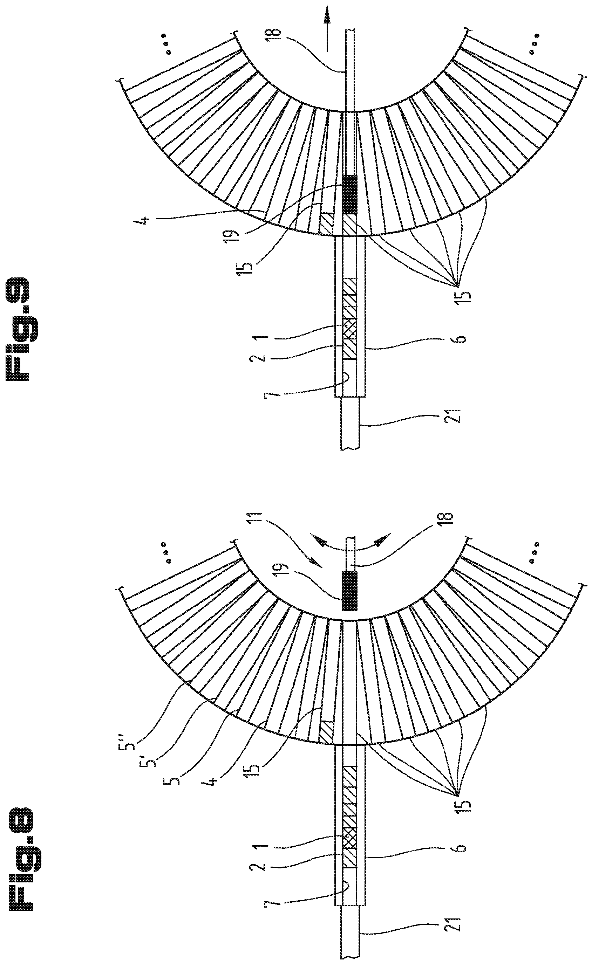

Anschließend wird die Transfereinrichtung 11 wieder in ihre Ausgangslage zurückgefahren und der Werkzeugspeicher 3 wir erneut (im Uhrzeigersinn) um eine Führungsschiene weiter gedreht, sodass nun eine andere Abstell-Führungsschiene 15 mit der Führungsschiene 7 der Zwischenablage 6 in fluchtender Ausrichtung steht (Fig. 8) Wieder wird das hinterste Biegewerkzeug in die betreffende Abstell-Führungsschiene gezogen (Fig. 9).

Diese Schritte werden wiederholt, bis alle Biegewerkzeuge vereinzelt und jeweils in einer anderen Abstell-Führungsschiene 15 untergebracht sind. Das Rangiermanöver gemäß Fig. 4 bis 10 stellt eine Möglichkeit dar, Biegewerkzeuge voneinander zu trennen oder in einer anderen Reihenfolge wieder zusammenzustellen. Letzteres kann dadurch erreicht werden, dass die einzelnen Schritte in unterschiedlicher Reihenfolge umgekehrt werden. Weiters kann ein Rangiermanöver parallel zu einem Biegevorgang durchgeführt werden, sodass die Auswahl und das Sortieren der Biegewerkzeuge keinen Einfluss auf die Taktzeiten hat.

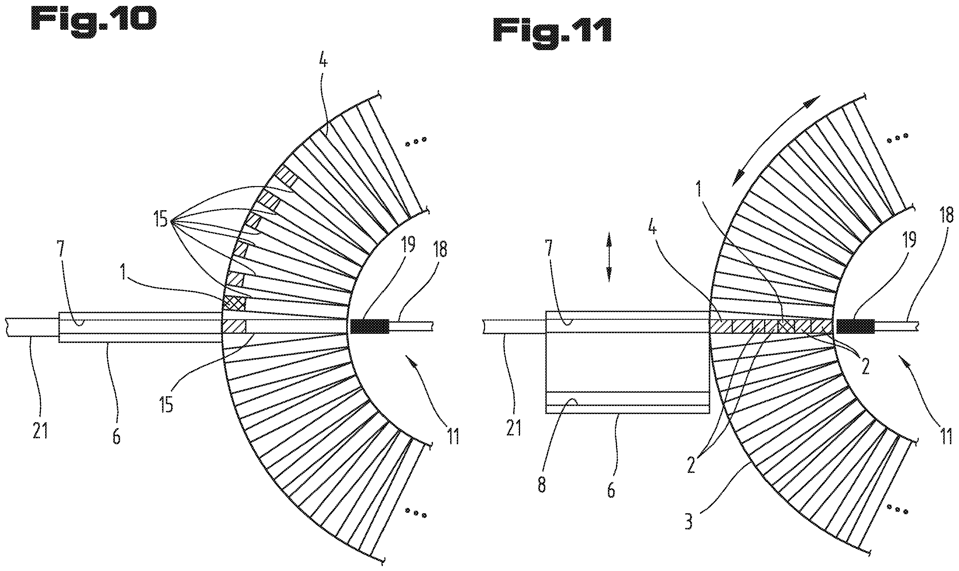

Fig. 11 zeigt eine Variante der erfindungsgemäßen Beschickungsvorrichtung 10: Die Zwischenablage 6 umfasst hier zwei Führungsschienen 7, 8 zum Halten und Führen von Biegewerkzeugen 1, 2. Dabei steht eine (erste) Führungsschiene 4 des Werkzeugspeichers 3 in verschiedenen Relativstellungen von Werkzeugspeicher 3 und Zwischenablage 6 jeweils mit einer anderen Führungsschiene 7, 8 der Zwischenablage 6 in fluchtender Ausrichtung. Die beiden Führungsschienen 7, 8 verlaufen parallel zueinander und sind auf einem gemeinsamen Träger ausgebildet. In dieser Ausführungsform ist die Zwischenablage 6 quer zur Längserstreckung ihrer Führungsschienen 7, 8 verschiebbar (mittels eines Antriebes 23; Fig. 1). Die erste Führungsschiene 7 kann z.B. als 'Arbeitsschiene' (zum Durchschieben von Biegewerkzeugen in die Biegepresse) und die zweite Führungsschiene 8 als ,Parkschiene' (zum Zwischenlagern) verwendet werden.

Im Falle eines ringförmigen Werkzeugspeichers, wie in Fig. 11 gezeigt, können die beiden Führungsschienen 7, 8 - alternativ - entlang zweier radialer Richtungen verlaufen, die durch die Rotationsachse des Werkzeugspeichers 3 gehen. Die Zwischenablage 6 könnte dann entlang eines kreis- oder teilkreisförmigen Pfades konzentrisch zum Werkzeugspeicher 3 bewegbar sein. Die Abfolge der Rangiermanöver könnte dieselbe sein wie unten beschrieben.

Anhand der Fig. 11 bis 18 wird nun ein mögliches Rangiermanöver mit einer solchen Zwischenablage 6 beschrieben: Fig. 11 stellt die Ausgangslage dar, in der ein erstes Biegewerkzeug 1 und mehrere zweite Biegewerkzeuge 2 in einer ersten Führungsschiene 4 des Werkzeugspeichers 3 in einer Reihe angeordnet sind. Die erste Führungsschiene 4 des Werkzeugspeichers 3 steht mit der ersten Führungsschiene 7 der Zwischenablage 6 in fluchtender Ausrichtung.

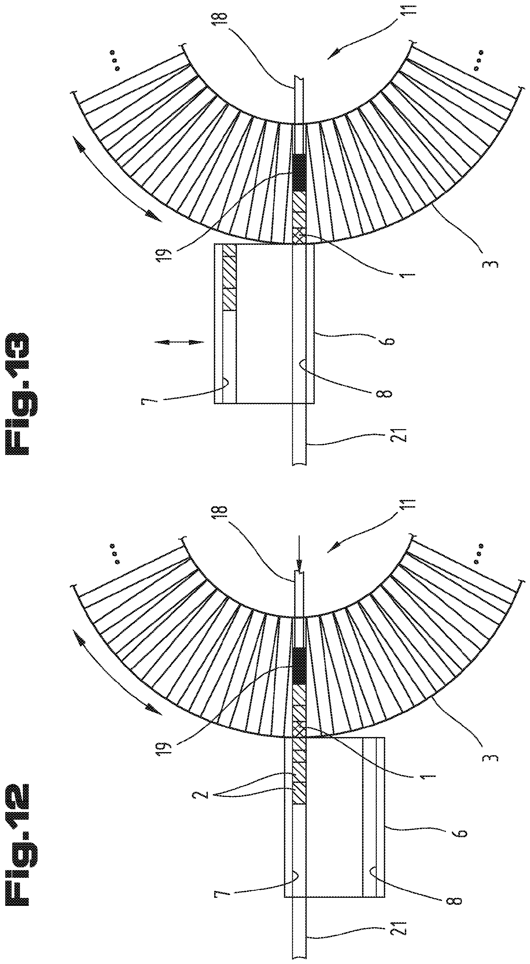

Die erste Transfereinrichtung 11 verschiebt nun in einem Schritt (a) die in der ersten Führungsschiene 4 des Werkzeugspeichers 3 angeordneten Biegewerkzeuge 1, 2 in Richtung Zwischenablage 6, bis die vor dem zumindest einen ersten Biegewerkzeug 1 angeordneten zweiten Biegewerkzeuge 2 in der ersten Führungsschiene 7 der Zwischenablage 6 sind (Fig. 12). Das erste Biegewerkzeug verbleibt noch im Werkzeugspeicher 3.

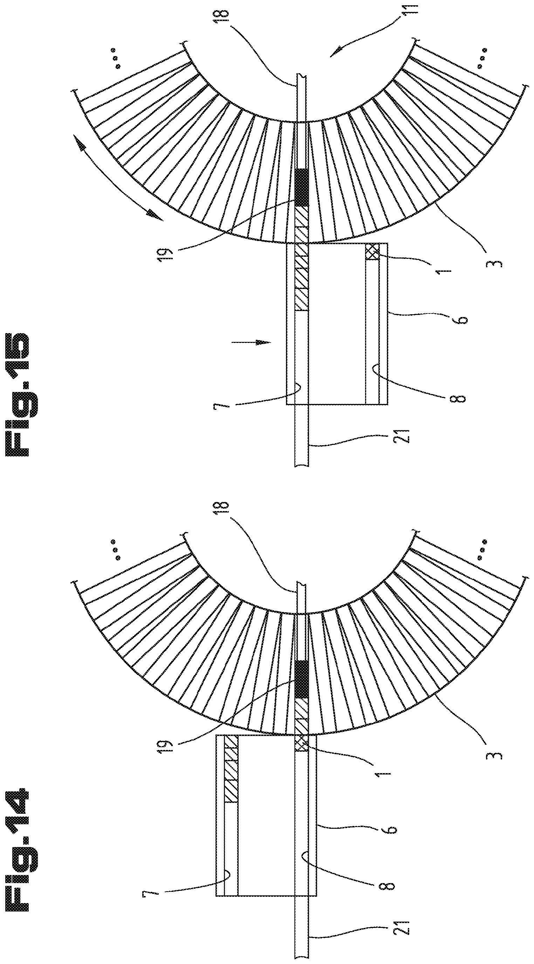

Nun erfolgt in einem Schritt (b) eine Relativbewegung zwischen Werkzeugspeicher 3 und Zwischenablage 6, sodass die zweite Führungsschiene 8 der Zwischenablage 6 mit der ersten Führungsschiene 4 des Werkzeugspeichers 3 in fluchtende Ausrichtung gelangt (Fig. 13). Danach wird das erste Biegewerkzeug 1 in einem Schritt (c) von der ersten Führungsschiene 4 des Werkzeugspeichers 3 in die zweite Führungsschiene 8 der Zwischenablage 6 verschoben (Fig. 14). Die hinter dem ersten Biegewerkzeug 1 angeordneten zweiten Biegewerkzeuge 2 bleiben vorerst in der ersten Führungsschiene 4 des Werkzeugspeichers 3.

Anschließend erfolgt wieder ein Schritt (b): Relativbewegung zwischen Werkzeugspeicher 3 und Zwischenablage 6, wobei nun wieder die erste Führungsschiene 7 der Zwischenablage 8 in fluchtender Ausrichtung mit der ersten Führungsschiene 4 des Werkzeugspeichers 3 steht (Fig. 15).

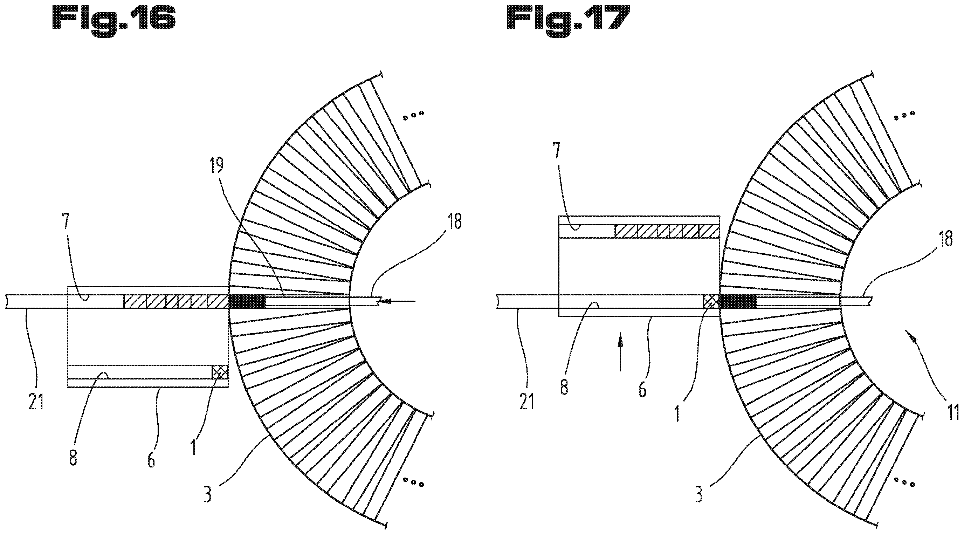

Das Rangiermanöver umfasst nun den Schritt: (d) Verschieben der zweiten Biegewerkzeuge 2, die (anfänglich) hinter dem ersten Biegewerkzeug 1 angeordnet waren, in die erste Führungsschiene 7 der Zwischenablage 6 (Fig. 16). Dort werden sie mit den anfänglich vor dem ersten Biegewerkzeug 1 angeordneten zweiten Biegewerkzeugen 2 vereint. Dieser Schritt erfolgt hier bevor das erste Biegewerkzeug 1 in die Führungsschiene 21 (Werkzeughalterung) der Biegepresse 20 verschoben wird.

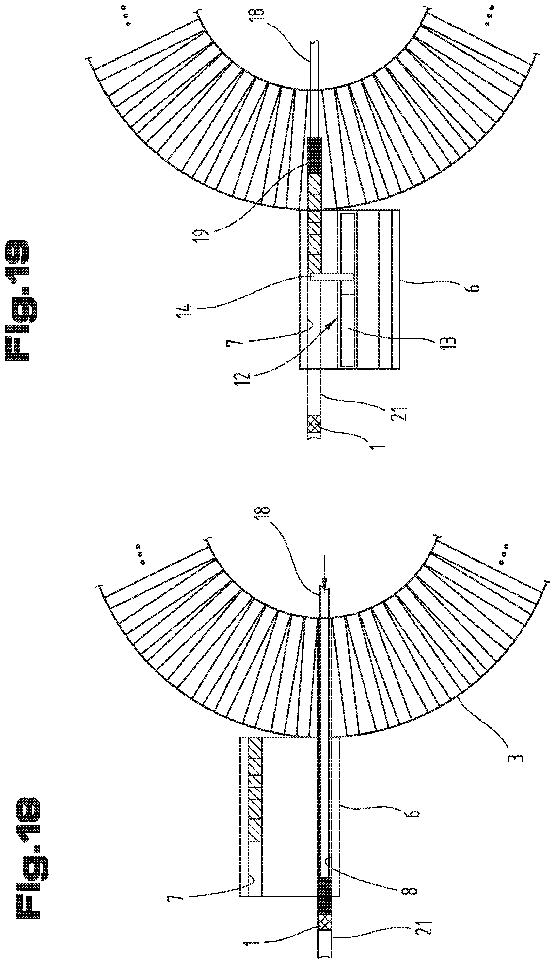

Anschließend erfolgt wieder ein Schritt (b): Relativbewegen, um die zweite Führungsschiene 7 der Zwischenablage 6 mit der ersten Führungsschiene 4 des Werkzeugspeichers 3 in fluchtende Ausrichtung zu bringen (Fig. 17). Anschließend wird das auf diese Weise extrahierte erste Biegewerkzeug 1 mit der ersten Transfereinrichtung 11 in die Biegepresse 20 verschoben (Fig. 18). Während des gesamten Rangiermanövers verbleiben die am Rangiermanöver beteiligten Biegewerkzeuge ununterbrochen in Führungsschienen eingesetzt. Die Biegewerkzeuge wechseln zwar die Führungsschienen, sie müssen aber nicht herausgenommen und an anderer Stelle wieder eingesetzt werden. Der Übergang erfolgt ausschließlich durch Verschieben entlang von Führungsschienen.

Fig. 19 zeigt eine bevorzugte Ausführungsform, bei der die Beschickungsvorrichtung 10 zumindest eine zweite Transfereinrichtung 12 zum Verschieben von Biegewerkzeugen 1, 2 umfasst. Diese ist im dargestellten Ausführungsbeispiel der Zwischenablage 6 zugeordnet und vorzugsweise in der Zwischenablage 6 integriert. Der Bewegungsraum der zweiten Transfereinrichtung 12 ist hier auf den Bereich der Zwischenablage 6 beschränkt (d.h. die zweite Transfereinrichtung 12 geht nicht über das Ende der Führungsschienen 7, 8 hinaus).

Die zweite Transfereinrichtung 12 kann einen (Schiebe-)Antrieb 13, insbesondere einen Speicherantrieb (z.B. einen Feder- oder Zylinder-Speicherantrieb), aufweisen. Der (Speicher- )Antrieb 13 kann durch Verschieben eines Biegewerkzeuges 1, 2 von einer Führungsschiene 4, 5 des Werkzeugspeichers 3 in eine Führungsschiene 7, 8 der Zwischenablage 6 beaufschlagbar sein. In diesem Fall wird er durch die erste Transfereinrichtung 11 'geladen'. Ein mit dem Antrieb 13 in Wirkverbindung stehendes Schiebeelement 14, (z.B. ein Finger) wirkt mit den Biegewerkzeugen zusammen. In der dargestellten Ausführungsform wirkt die zweite Transfereinrichtung 12 nur in Richtung des Werkzeugspeichers 3 (kann also die Biegewerkzeuge nur in die Werkzeugspeicher zurück verschieben). Selbstverständlich ist auch eine in beide Richtungen wirkende zweite Transfereinrichtung denkbar (z.B. ein doppelwirkender Zylinder, ein Servo-Antrieb oder generell: ein aktiver Antrieb). Im Übrigen könnte auch die in den Fig. 2 bis 10 dargestellte Zwischenablage 7 mit einer zweiten Transfereinrichtung ausgestattet sein.

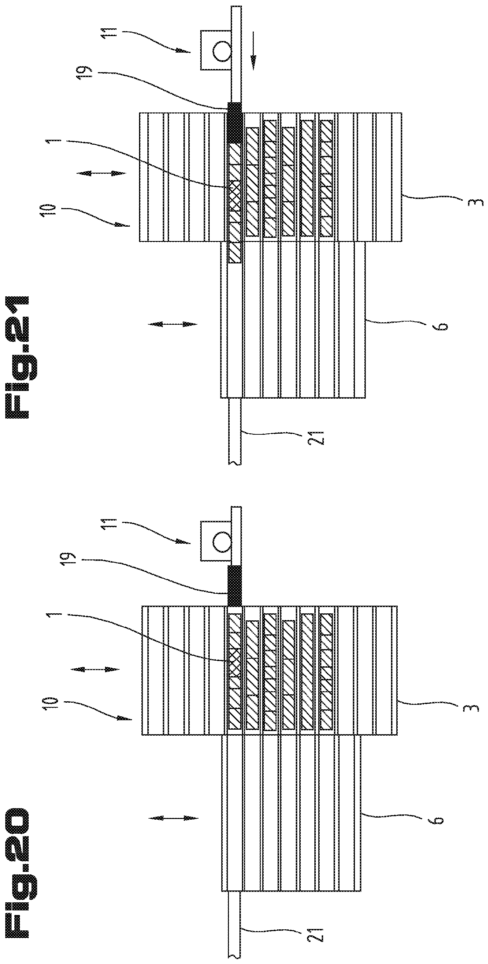

Die Fig. 20 bis 21 zeigen eine Variante einer Beschickungsvorrichtung 10, die sich von den vorangegangenen Varianten in zweierlei Hinsicht unterscheiden: Der Werkzeugspeicher 3 umfasst parallel zueinander verlaufende Führungsschienen; und die Zwischenablage umfasst mehrere (hier: sechs) Führungsschienen. Sowohl Werkzeugspeicher 3 als auch Zwischenablage 6 sind jeweils unabhängig voneinander (und jeweils relativ zur Führungsschiene 21 der Biegepresse 20) verschiebbar.

Im Folgenden wird anhand der Fig. 20 bis 21 ein weiteres Rangiermanöver zum Trennen von Biegewerkzeugen beschrieben: In einer Ausgangslage sind alle Biegewerkzeuge im Werkzeugspeicher 3. Die einzelnen Biegewerkzeuge, die anfänglich in derselben Führungsschiene des Werkzeugspeichers 3 sitzen, werden nacheinander auf die Führungsschienen der Zwischenablage 6 aufgeteilt (Fig. 21 und 22). Zwischen den einzelnen Verschiebeschritten wird die Zwischenablage 6 jeweils um eine Führungsschiene relativ zum Werkzeugspeicher 3 weiterbewegt.

Fig. 23 zeigt schließlich eine weitere Variante, bei der die Zwischenablage 6 nur eine Führungsschiene 7 umfasst. Dieser ist jedoch eine zweite Transfereinrichtung 12 der weiter oben erwähnten Art, ausgestattet mit einem aktiven, doppelwirkenden Antrieb 13, zugeordnet. Mit dieser zweiten Transfereinrichtung 12 können Biegewerkzeuge (ähnlich dem anhand der Fig. 4 bis 10 beschriebenen Rangiermanöver) auf die anfänglich leeren Abstell-Führungsschienen 15 des Zwischenspeichers verteilt werden. Für diesen Vorgang ist die erste Transfereinrichtung 11 nicht unbedingt erforderlich.

Fig. 1 zeigt, dass die Beschickungsvorrichtung 10 eine Steuereinrichtung 16 umfasst, die mit dem Antrieb 17 der ersten Transfereinrichtung 11 und mit den Antrieben 22 und 23 zum (Relativ)Bewegen von Werkzeugspeicher 3 und Zwischenablage 6 verbunden ist. Die Steuereinrichtung 16 steuert einen Beschickungsvorgang, bei dem eine Biegepresse 20 mit zumindest einem ersten Biegewerkzeug 1 aus dem Werkzeugspeicher 3 beschickt wird. Dabei ist (anfänglich) das zumindest eine erste Biegewerkzeug 1 zusammen mit zumindest einem zweiten Biegewerkzeug 2 in einer (ersten) Führungsschiene 4 des Werkzeugspeichers 3 in einer Reihe angeordnet. Das erste Biegewerkzeug 1 wird von dem zumindest einen zweiten Biegewerkzeug 2 mittels eines Rangiermanövers durch Verschieben entlang von Führungsschienen 4, 5, 7, 8, 21 getrennt.

In den dargestellten Ausführungsformen ist die Zwischenablage 6 zwischen dem Werkzeugspeicher 3 und der Biegepresse 20 angeordnet.

Bevorzugt wird auch, wenn - gemäß den Ausführungsformen von Fig. 11 bis 22 - die Zwischenablage 6 relativ zur Werkzeughalterung der Biegepresse 20 be-wegbar ist, vorzugsweise quer zur Längserstreckung ihrer zumindest einen Füh-rungsschiene 7, 8 verschiebbar ist. Dadurch kommen in unterschiedlichen Relativstellungen verschiedene Führungsschienen 7, 8 der Zwischenablage in fluchtende Ausrichtung mit der Führungsschiene 21 der Werkzeughalterung 25.

Aus den Figuren ist ebenfalls zu sehen, dass in zumindest einer Relativstellung von Zwischenablage 6 und Werkzeugspeicher 3 eine durchgängige Führung aus einer Führungsschiene 4, 5 des Werkzeugspeichers 3, einer Führungsschiene 7, 8 der Zwischenablage 6 und der als Führungsschiene 21 ausgebildeten Werkzeughalterung der Biegepresse 20 gebildet wird. Der Bewegungsraum der ersten Transfereinrichtung 11 erstreckt sich dabei über die Führungsschiene 4, 5 des Werkzeugspeichers 3, die Führungsschiene 7, 8 der Zwischenablage 6 und die als Führungsschiene 21 ausgebildete Werkzeughalterung der Biegepresse 20.

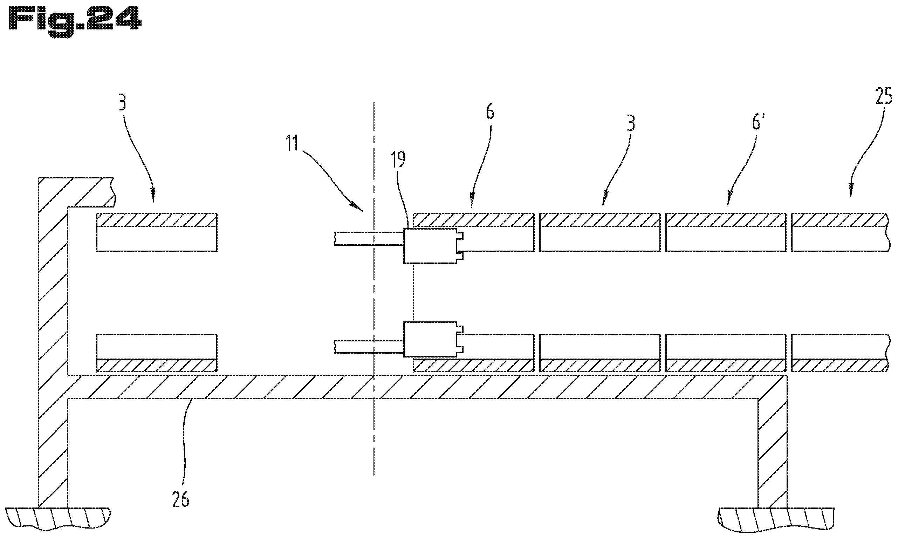

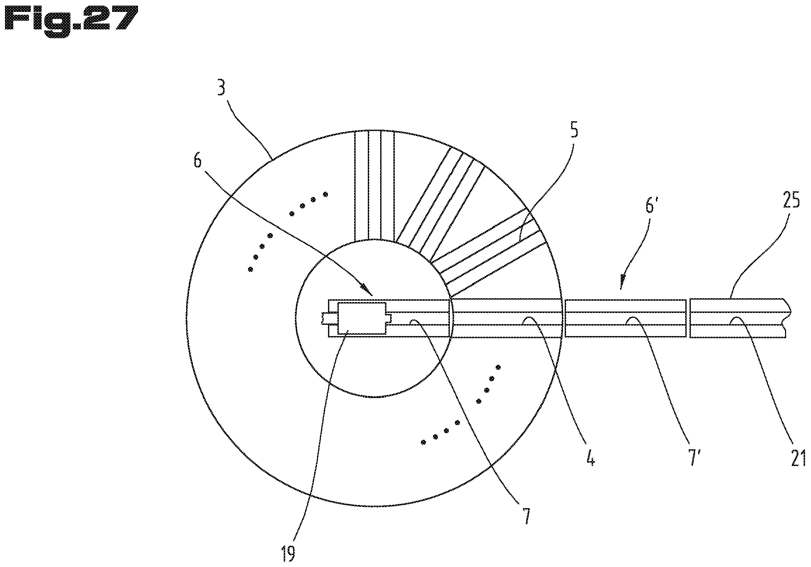

Fig. 24 und Fig. 27 zeigen eine mögliche Ausführungsform einer Beschickungsvorrichtung mit einem kreisförmigen Oberwerkzeugspeicher 3 und dazugehöriger Zwischenablage 6 für Oberwerkzeuge und mit einem Unterwerkzeugspeicher. Oberwerkzeug- und Unterwerkzeugeinheiten der Beschickungsvorrichtung sind entsprechend der Anordnung der Werkzeughalterungen in einer Biegepresse übereinander angeordnet. Werkzeugspeicher und Zwischenablagen sind auf einem gemeinsamen Rahmen 26 gelagert. In der dargestellten Ausführungsform sind die Werkzeugspeicher drehbar und somit relativ zur Zwischenablage bewegbar.

Aus Fig. 24 und 27 ist eine Ausführungsform ersichtlich, bei der die Beschickungsvorrichtung zwei Zwischenablagen 6, 6' mit jeweils zumindest einer Führungsschiene 7, 7' zum Halten und Führen von Biegewerkzeugen 1, 2 aufweist.

Dabei ist der Werkzeugspeicher 3 relativ zu den Zwischenablagen 6, 6' bewegbar, wobei (wie bereits im Zusammenhang mit der ersten Zwischenablage 6 beschrieben) auch zumindest eine Führungsschiene 7' der weiteren Zwischenablage 6' in verschiedenen Relativstellungen von Werkzeugspeicher 3 und weiterer Zwischenablage 6' jeweils mit einer anderen Führungsschiene 4, 5 des Werkzeugspeichers 3 in fluchtender Ausrichtung steht.

Zu sehen ist, dass zumindest ein Abschnitt des Werkzeugspeichers 3 zwischen den Zwischenablagen 6, 6' angeordnet ist. Es kann in zumindest einer Relativstellung von Werkzeugspeicher 3 und Zwischenablagen 6, 6' durch eine Führungsschiene 7 einer Zwischenablage 6, eine Führungsschiene 4 des Werkzeugspeichers 3 und eine Führungsschiene 7' einer anderen Zwischenablage 6' ein durchgehender Führungsabschnitt ausgebildet sein.

In den Fig. 24 und 27 ist der Werkzeugspeicher 3 ringförmig und eine Zwischenablage 6 ist in dem vom ringförmigen Werkzeugspeicher 3 umschlossenen Bereich angeordnet.

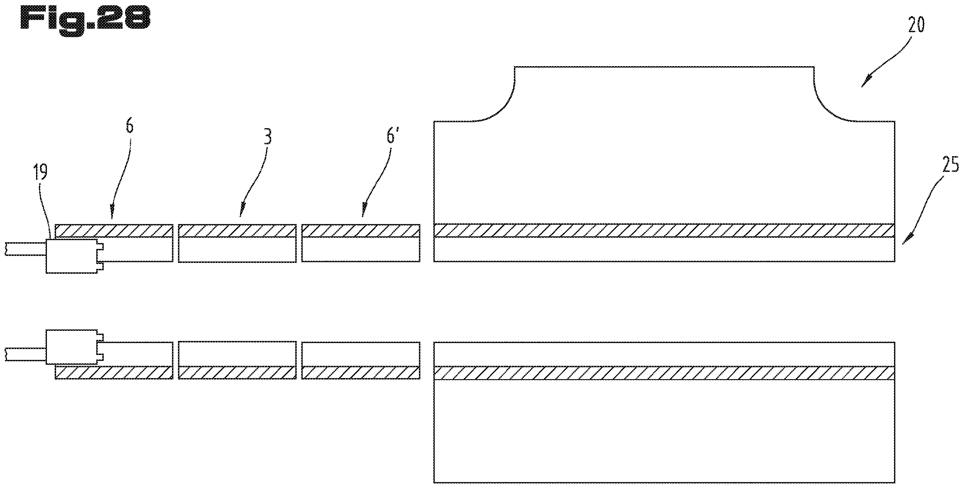

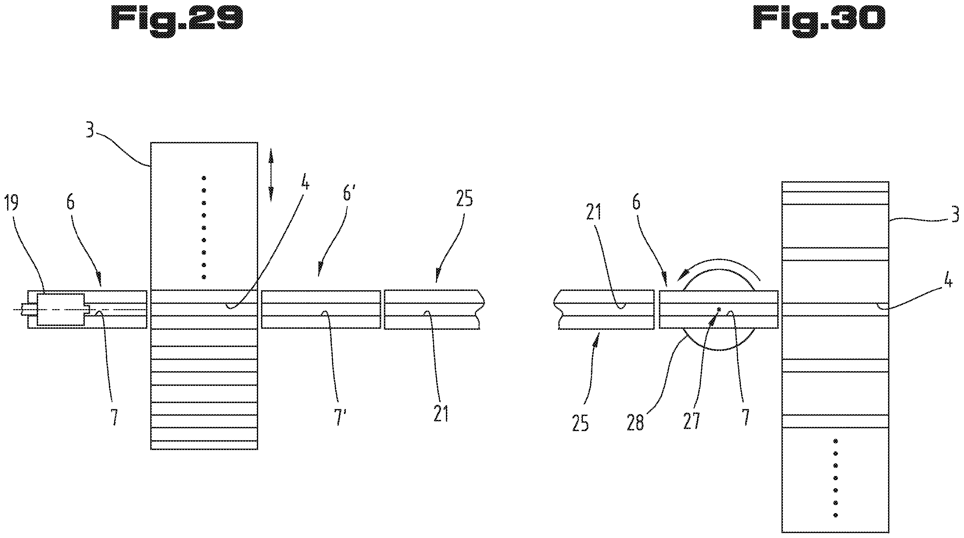

Die Fig. 28 und 29 zeigen eine Ausführungsform mit einem (linear) verschiebbaren Werkzeugspeicher 3, der parallel zueinander verlaufende Führungsschienen 4, 5 aufweist. Links und rechts neben dem Werkzeugspeicher 3 können Zwischenablagen 6, 6' angeordnet sein.

Fig. 30 zeigt eine besonders bevorzugte Ausführungsform, bei der die Zwischenablage 6 um eine Drehachse 27 drehbar ist (mit einem Pfeil angedeutet). Alternativ könnte auch nur die Führungsschiene 7 der Zwischenablage 6 drehbar sein. In einer ersten Drehposition der Zwischenablage 6 grenzt das eine Ende der Führungsschiene 7 der Zwischenablage 6 an den Werkzeugspeicher 3 und in einer zweiten (um 180° gedrehten) Drehposition der Zwischenablage 6 grenzt das andere Ende der Führungsschiene 7 der Zwischenablage 6 an den Werkzeugspeicher 3. Selbstverständlich kann die drehbare Zwischenablage 6 auch mehr als nur eine Führungsschiene aufweisen.

Die Zwischenablage 6 kann aus der gemeinsamen Ebene mit dem Werkzeugspeicher 3 absenkbar oder hebbar sein. Die Drehung erfolgt dann in der abgesenkten bzw. gehobenen Stellung. Nach der Drehung wird die Zwischenablage 6 wieder in die gemeinsame Ebene mit dem Werkzeugspeicher 3 gebracht.

Die Zwischenablage 6 weist eine Dreheinheit 28 auf (oder wirkt mit einer solchen zusammen), durch welche die Zwischenablage 6 als Ganze oder eine Führungsschiene 7 der Zwischenablage 6 drehbar ist, vorzugsweise um eine senkrecht zur Längserstreckung der Führungsschiene 7 der Zwischenablage 6 stehende Achse.

Aus den Fig. 24, 27, 28 und 29 ist ersichtlich, dass der Werkzeugspeicher 3 zwischen der Biegepresse 20 und einer Zwischenablage 6 angeordnet sein kann. Ebenso ist zu sehen, dass sich die Parkposition der ersten Transfereinrichtung 11, insbesondere die Parkposition des, vorzugsweise komplett, eingefahrenen Shuttles 19 (z.B. Schiebers), auf einer Zwischenablage 6 befindet.

Insbesondere im Zusammenhang mit einem Werkzeugspeicher aus parallelen Führungsschienen wird auch bevorzugt, dass der Werkzeugspeicher stationär ist und die Zwischenablage (relativ zum Rahmen) bewegbar.

Im Folgenden werden bevorzugte Ausführungsformen eines Verfahrens zum Beschicken einer Biegepresse 20 mit zumindest einem ersten Biegewerkzeug 1 aus einem Werkzeugspeicher 3 einer Beschickungsvorrichtung 10 beschrieben.

In der Ausgangslage ist zumindest ein erstes Biegewerkzeug 1 zusammen mit zumindest einem zweiten Biegewerkzeug 2 in einer ersten Führungsschiene 4 des Werkzeugspeichers 3 in einer Reihe angeordnet. Das erste Biegewerkzeug 1 wird von dem zumindest einen zweiten Biegewerkzeug 2 mittels eines Rangiermanövers durch Verschieben entlang von Führungsschienen 4, 5, 5', 5", 15, 7, 8, 21 getrennt. Die beteiligten Biegewerkzeuge bleiben dabei ununterbrochen in Führungsschienen eingesetzt.

Das Rangiermanöver erfolgt mit zumindest einer entlang der Führungsschienen verfahrbaren Transfereinrichtung 11, 12, die vorzugsweise in den Führungsschienen geführt ist.

Wie bereits anhand der Figuren erwähnt umfasst das Rangiermanöver die Schritte:
(a) Verschieben zumindest eines Biegewerkzeuges 1, 2 von der ersten Führungsschiene 4 des Werkzeugspeichers 3 auf eine Führungsschiene 7, 8 einer Zwischenablage 6 und
(b) Relativbewegung zwischen Werkzeugspeicher 3 und Zwischenablage 6.

Diese Schritte können je nach Erfordernis beliebig oft wiederholt werden. D.h. Schritt (a) kann nach einem Schritt (b) zumindest einmal wiederholt und/oder Schritt (b) kann nach einem Schritt (a) zumindest einmal wiederholt werden.

Durch Schritt (b) gelangt die Führungsschiene 7, 8 der Zwischenablage 6 in fluchtende Ausrichtung mit einer anderen Führungsschiene 4, 5 des Werkzeugspeichers 3. Bevorzugt wird auch, wenn durch Schritt (b) eine zweite Führungsschiene 8 der Zwischenablage 6 in fluchtende Ausrichtung mit der ersten Führungsschiene 4 des Werkzeugspeichers 3 gelangt.

Das Rangiermanöver kann dabei derart durchgeführt werden, dass im Schritt (a) die in der ersten Führungsschiene 4 des Werkzeugspeichers 3 angeordneten Biegewerkzeuge 1, 2 in Richtung Zwischenablage 6 verschoben werden, bis das/die vor dem zumindest einen ersten Biegewerkzeug 1 angeordneten zweite(n) Biegewerkzeug(e) 2 in der Führungsschiene 7 der Zwischenablage 6 ist/sind. Anschließend wird Schritt (b) durchgeführt: Relativbewegung zwischen Werkzeugspeicher 3 und Zwischenablage 6.

Dann wird das zumindest eine erste Biegewerkzeug 1 in einem Schritt (c) von der ersten Führungsschiene 4 des Werkzeugspeichers 3 in eine Führungsschiene 8 der Zwischenablage 6 verschoben. Vorzugsweise werden die zweiten Biegewerkzeuge 2 in eine andere Führungsschiene des Zwischenspeichers 6 verschoben als das zumindest eine erste Biegewerkzeug 1.

Vorzugsweise werden zwischen dem Schritt (b) und dem Schritt (c) das/die in der Zwischenablage 6 zwischengelagerte(n) zweite(n) Biegewerkzeug(e) 2 in zumindest eine zweite Führungsschiene 5 des Werkzeugspeichers 3 verschoben. Ein derartiges Rangiermanöver kann somit auch mit einer Zwischenablage durchgeführt werden, die nur eine Führungsschiene aufweist.

Wenn die Zwischenablage - so wie in den Fig. 11 bis 22 gezeigt - zumindest zwei Führungsschienen aufweist wird folgendes Rangiermanöver bevorzugt: Im Schritt (a) wird/werden das/die zweite(n) Biegewerkzeug(e) 2 in eine erste Führungsschiene 7 der Zwischenablage 6 verschoben und im Schritt (c) das zumindest eine erste Biegewerkzeug 1 in eine zweite Führungsschiene 8 der Zwischenablage 6 verschoben.

In einer weiteren Variante werden mehrere Biegewerkzeuge durch Rangiervorgänge in einer vorgegebenen Reihenfolge in einer Führungsschiene 7, 8 einer Zwischenablage 6, die relativ zum Werkzeugspeicher 3 bewegbar ist, zusammengestellt, bevor sie in die Werkzeughalterung 25 der Biegepresse 20 geschoben werden.

Eine weitere Ausführungsform zeichnet sich dadurch aus, dass die (anfänglich) in einer ersten Führungsschiene des Werkzeugspeichers in einer Reihe angeordneten Biegewerkzeuge einzeln und oder in Gruppen durch ein Rangiermanöver über die Zwischenablage in unterschiedliche (Abstell-)Führungsschienen 15 des Werkzeugspeichers 3 verbracht werden. Vorzugsweise gelangt dabei jedes einzelne Biegewerkzeug in eine gesonderte Führungsschiene 15 des Werkzeugspeichers 3 (siehe Fig. 4 bis 10).

Eine weitere Ausführungsform zeichnet sich dadurch aus, dass die Reihenfolge von in einer Führungsschiene angeordneten Biegewerkzeugen durch ein Rangiermanöver verändert wird.

Bevorzugte Ausführungsformen berücksichtigen auch die Mit-Verwendung einer weiteren Zwischenablage 6'. Das Rangiermanöver kann hier einen Schritt (e) umfassen: Verschieben zumindest eines Biegewerkzeuges 1, 2 von einer Führungsschiene 4 des Werkzeugspeichers 3 oder von einer Führungsschiene 7 der Zwischenablage 6 auf eine Führungsschiene 7' einer weiteren Zwischenablage 6'.

Ein möglicher Schritt (f) ergibt sich aus den in den Fig. 24, 27, 28 und 29 dargestellten Varianten: Verschieben zumindest eines Biegewerkzeuges 1, 2 von einer Führungsschiene 7 einer Zwischenablage 6 durch eine Führungsschiene 4 des Werkzeugspeichers 3 auf eine Führungsschiene 7' einer anderen Zwischenablage 6'.

Im Zusammenhang mit Fig. 30 kann das Rangiermanöver auch ein Drehen der Zwischenablage 6 um die Drehachse 27 (vorzugsweise um 180°) umfassen.

Wie bereits erwähnt, können alle Eigenschaften und Verfahrensschritte, die im Zusammenhang mit der (ersten) Zwischenablage 6 beschrieben wurden, auf die zumindest eine weitere (bzw. zweite) Zwischenablage 6' übertragen werden bzw. bei dieser verwirklicht sein.

Zusätzlich ist es möglich, die beschriebenen Merkmale und Verfahrensschritte zu kombinieren, um besondere operative Abfolgen zu erhalten. Unter Berücksichtigung der Variante aus Fig. 27, beispielsweise, mit einem Shuttle 19 ist es möglich, ein Werkzeug 1 von der Führungsschiene 21 der Biegepresse zur Führungsschiene 7 über die Führungsschiene 7' der Zwischenablage 6' und die Führungsschiene 4 des Werkzeugspeichers 3 zu bewegen. Anschließend, nach der relativen Bewegung zwischen der Zwischenablage 6 und dem Werkzeugspeicher 3, ist es möglich, ein Werkzeug von der Führungsschiene 5 zur Führungsschiene 7' oder zur Führungsschiene 21, dabei die Führungsschiene 4 passierend und unter Verwendung einer entgegengesetzten Abfolge, zu bewegen.

**Bezugszeichenaufstellung**

| | | | |
|---|---|---|---|
| 1 | Erstes Biegewerkzeug | 21 | Führungsschiene der Biegepresse 20 |
| 2 | Zweites Biegewerkzeug | 22 | Antrieb zum Bewegen des Werkzeugspeichers 3 |
| 3 | Werkzeugspeicher | | |
| 4 | Erste Führungsschiene des Werkzeugspeichers 3 | 23 | Antrieb zum Bewegen der Zwischenablage 6 |
| 5, 5', 5" | Zweite Führungsschiene des Werkzeugspeichers 3 | 24 | Kupplung |
| | | 25 | Werkzeughalterung |
| 6, 6' | Zwischenablage | 26 | Rahmen |
| 7 | Erste Führungsschiene der Zwischenablage 6 | 27 | Drehachse |
| | | 28 | Dreheinheit |
| 7' | Führungsschiene der Zwischenablage 6' | | |
| 8 | Zweite Führungsschiene der Zwischenablage 6 | | |
| 10 | Beschickungsvorrichtung | | |
| 11 | Erste Transfereinrichtung | | |
| 12 | Zweite Transfereinrichtung | | |
| 13 | Antrieb der zweiten Transfereinrichtung 12 | | |
| 14 | Schiebeelement | | |
| 15 | Führungsschiene des Werkzeugspeichers 3 | | |
| 16 | Steuereinrichtung | | |
| 17 | Antrieb der ersten Transfereinrichtung | | |
| 18 | Zug- und/oder Druckübertragungsmittel | | |
| 19 | Shuttle | | |
| 20 | Biegepresse | | |

## Patentansprüche

1. Beschickungsvorrichtung (10), insbesondere Wechselvorrichtung, zum Beschicken einer Biegepresse (20) mit Biegewerkzeugen (1) und/oder zum Auswechseln von einem oder mehreren in einer Biegepresse (20) eingesetzten Biegewerkzeugen, umfassend einen Werkzeugspeicher (3) mit zumindest zwei, vorzugsweise einer Vielzahl von Führungsschienen (4, 5) zum Halten und Führen von Biegewerkzeugen (1, 2) und zumindest eine erste Transfereinrichtung (11) zum Verschieben der Biegewerkzeuge (1, 2) entlang einer Führungsschiene (4, 5, 7, 8, 21), **gekennzeichnet durch** eine Zwischenablage (6) mit zumindest einer Führungsschiene (7, 8) zum Halten und Führen von Biegewerkzeugen (1, 2), wobei der Werkzeugspeicher (3) und die Zwischenablage (6) relativ zueinander bewegbar sind und wobei zumindest eine Führungsschiene (7, 8) der Zwischenablage in verschiedenen Relativstellungen von Werkzeugspeicher (3) und Zwischenablage (6) jeweils mit einer anderen Führungsschiene (4, 5) des Werkzeugspeichers (3) in fluchtender Ausrichtung stehen kann, weiters **dadurch** gekennzeichnet,
dass zur Verwirklichung einer Relativbewegung zwischen Werkzeugspeicher (3) und Zwischenablage (6) die Zwischenablage (6), vorzugsweise auch der Werkzeugspeicher (3), bewegbar ausgebildet ist/sind
und/oder
dass die Führungsschienen (4, 5) des Werkzeugspeichers (3) und/oder Führungsschienen (7, 8) der Zwischenablage (6) parallel zueinander verlaufen.

2. Beschickungsvorrichtung nach Anspruch 1, **dadurch gekennzeichnet, dass** die Zwischenablage (6) zumindest zwei Führungsschienen (7, 8) zum Halten und Führen von Biegewerkzeugen (1, 2) umfasst, wobei vorzugsweise eine Führungsschiene (4, 5) des Werkzeugspeichers (3) in verschiedenen Relativstellungen von Werkzeugspeicher (3) und Zwischenablage (6) jeweils mit einer anderen Führungsschiene (7, 8) der Zwischenablage (6) in fluchtender Ausrichtung steht.

3. Beschickungsvorrichtung nach Anspruch 1 oder 2, **dadurch gekennzeichnet, dass** die Führungsschienen (4, 5) des Werkzeugspeichers (3) und/oder die Führungsschienen der Zwischenablage (6) entlang eines Kreisbogens oder einer Kreislinie in radialer Richtung verlaufend angeordnet sind.

4. Beschickungsvorrichtung nach einem der vorhergehenden Ansprüche, **dadurch gekennzeichnet, dass** die Zwischenablage (6) relativ zum Werkzeugspeicher (3) quer zur Längserstreckung ihrer zumindest einen Führungsschiene (7, 8) verschiebbar ist und/oder dass die Zwischenablage (6) relativ zum Werkzeugspeicher (3) entlang einer kreisförmigen oder teilkreisförmigen Bahn bewegbar ist.

5. Beschickungsvorrichtung nach einem der vorhergehenden Ansprüche, **dadurch gekennzeichnet, dass** der Werkzeugspeicher (3) relativ zur Zwischenablage (6) um eine Drehachse, die senkrecht zu der durch die zumindest zwei Führungsschienen (4, 5) des Werkzeugspeichers (3) aufgespannten Ebene steht, drehbar ist.

6. Beschickungsvorrichtung nach einem der vorhergehenden Ansprüche, **dadurch gekennzeichnet, dass** die Beschickungsvorrichtung (10) zumindest eine zweite Transfereinrichtung (12) zum Verschieben von Biegewerkzeugen (1, 2) umfasst, wobei die zweite Transfereinrichtung (12) der Zwischenablage (6) zugeordnet und vorzugsweise in der Zwischenablage (6) integriert ist, wobei vorzugsweise der Bewegungsraum der zweiten Transfereinrichtung (12) auf den Bereich der Zwischenablage (6) beschränkt ist.

7. Beschickungsvorrichtung nach Anspruch 6, **dadurch gekennzeichnet, dass** die zweite Transfereinrichtung (12) einen Speicherantrieb (13), insbesondere einen Feder- oder Zylinder-Speicherantrieb, aufweist, der vorzugsweise durch Verschieben eines Biegewerkzeuges (1, 2) von einer Führungsschiene (4, 5) des Werkzeugspeichers in eine Führungsschiene (7, 8) der Zwischenablage (6) beaufschlagbar ist, und/oder dass die zweite Transfereinrichtung (12) einen aktiven Antrieb aufweist.

8. Beschickungsvorrichtung nach einem der vorhergehenden Ansprüche, **dadurch gekennzeichnet, dass** zumindest eine Führungsschiene (4, 5) des Werkzeugspeichers (3) zumindest zwei, vorzugsweise eine Vielzahl von in einer Reihe angeordneten Biegewerkzeugen (1, 2) hält.

9. Beschickungsvorrichtung nach einem der vorhergehenden Ansprüche, **dadurch gekennzeichnet, dass** die Beschickungsvorrichtung (10) eine Steuereinrichtung (16) umfasst, die mit dem Antrieb (17) der ersten Transfereinrichtung (11) und mit einem Antrieb (22) zum Relativbewegen von Werkzeugspeicher (3) und Zwischenablage (6) verbunden und eingerichtet ist, um einen Beschickungsvorgang, bei dem eine Biegepresse (20) mit zumindest einem ersten Biegewerkzeug (1) aus dem Werkzeugspeicher (3) beschickt wird, zu steuern, wobei das zumindest eine erste Biegewerkzeug (1) zusammen mit zumindest einem zweiten Biegewerkzeug (2) in einer ersten Führungsschiene (4) des Werkzeugspeichers (3) in einer Reihe angeordnet ist und wobei das erste Biegewerkzeug (1) von dem zumindest einen zweiten Biegewerkzeug (2) mittels eines Rangiermanövers durch Verschieben entlang von Führungsschienen (4, 5, 7, 8, 21) getrennt wird.

10. Beschickungsvorrichtung nach einem der vorhergehenden Ansprüche, **dadurch gekennzeichnet, dass** sich der Bewegungsraum der ersten Transfereinrichtung (11) über zumindest eine Führungsschiene (4, 5) des Werkzeugspeichers (3) und zumindest eine Führungsschiene (7, 8) der Zwischenablage (6) erstreckt.

11. Beschickungsvorrichtung nach einem der vorhergehenden Ansprüche, **dadurch gekennzeichnet, dass** die erste Transfereinrichtung (11) ein entlang zumindest einer Füh-rungsschiene (4, 5, 6, 7, 21) verfahrbares, vorzugsweise in der Führungsschiene (4, 5, 6, 7, 21) geführtes, Shuttle (19) umfasst, das vorzugsweise über ein längliches Zug- und/oder Druckübertragungsmittel (18) mit einem Antrieb (17) verbunden ist, wobei vorzugsweise das Shuttle (19) selbstfahrend ausgebildet ist.

12. Beschickungsvorrichtung nach einem der vorhergehenden Ansprüche, **gekennzeichnet durch** zumindest eine weitere Zwischenablage (6') mit zumindest einer Führungsschiene (7') zum Halten und Führen von Biegewerkzeugen (1, 2), wobei vorzugsweise der Werkzeugspeicher (3) und die zumindest eine weitere Zwischenablage (6') relativ zueinander bewegbar sind und zumindest eine Führungsschiene (7') der weiteren Zwischenablage (6') in verschiedenen Relativstellungen von Werkzeugspeicher (3) und weiterer Zwischenablage (6') jeweils mit einer anderen Führungsschiene (4, 5) des Werkzeugspeichers (3) in fluchtender Ausrichtung steht.

13. Beschickungsvorrichtung nach Anspruch 12, **dadurch gekennzeichnet, dass** zumindest ein Abschnitt des Werkzeugspeichers (3) zwischen den Zwischenablagen (6, 6') angeordnet ist und/oder dass in zumindest einer Relativstellung von Werkzeugspeicher (3) und Zwischenablagen (6, 6') durch eine Führungsschiene (7) einer Zwischenablage (6), eine Füh-rungsschiene (4) des Werkzeugspeichers (3) und eine Führungsschiene (7') einer anderen Zwischenablage (6') ein durchgehender Führungsabschnitt ausgebildet ist.

14. Beschickungsvorrichtung nach einem der vorhergehenden Ansprüche, **dadurch gekennzeichnet, dass** der Werkzeugspeicher (3) ringförmig ist und die Zwischenablage (6, 6') in dem vom ringförmigen Werkzeugspeicher (3) umschlossenen Bereich angeordnet ist und/oder dass die Zwischenablage (6, 6') absenkbar oder hebbar ist, insbesondere aus der gemeinsamen Ebene mit dem Werkzeugspeicher (3).

15. Beschickungsvorrichtung nach einem der vorhergehenden Ansprüche, **dadurch gekennzeichnet, dass** eine Zwischenablage (6, 6') oder eine Führungsschiene der Zwischenablage (6, 6') um eine Drehachse (27) drehbar ist, wobei vorzugsweise in einer ersten Drehposition der Zwischenablage (6, 6') das eine Ende einer Führungsschiene (7, 7') der Zwischenablage (6, 6') an den Werkzeugspeicher (3) grenzt und in einer zweiten Drehposition der Zwischenablage (6, 6') das andere Ende der Führungsschiene (7, 7') der Zwischenablage (6, 6') an den Werkzeugspeicher (3) grenzt.

16. Beschickungsvorrichtung nach einem der vorhergehenden Ansprüche, **dadurch gekennzeichnet, dass** die Zwischenablage (6, 6') eine Dreheinheit (28) aufweist oder mit einer Dreheinheit (28) zusammenwirkt, durch welche die Zwischenablage (6, 6') als Ganze oder eine Führungsschiene (7, 7') der Zwischenablage (6, 6') drehbar ist, vorzugsweise um eine senkrecht zur Längserstreckung einer Führungsschiene (7, 7') der Zwischenablage (6, 6') stehende Achse.

17. Anordnung einer Biegepresse (20) und einer daran gekoppelten Beschickungsvorrichtung (10) zum Beschicken der Biegepresse (20) mit Biegewerkzeugen (1, 2), wobei die Biegepresse (20) eine als Führungsschiene (21) ausgebildete Werkzeughalterung zum Halten und Führen von Biegewerkzeugen (1, 2) aufweist, **dadurch gekennzeichnet, dass** die Beschickungsvorrichtung (10) nach einem der vorhergehenden Ansprüche ausgebildet ist.

18. Anordnung nach Anspruch 17, **dadurch gekennzeichnet, dass** die Zwischenablage (6) zwischen dem Werkzeugspeicher (3) und der Biegepresse (20) angeordnet ist und/oder dass der Werkzeugspeicher (3) zwischen der Biegepresse (20) und einer Zwischenablage (6, 6') angeordnet ist.

19. Anordnung nach Anspruch 17 oder 18, **dadurch gekennzeichnet, dass** die Zwischenablage (6) relativ zur Werkzeughalterung der Biegepresse (20) bewegbar ist, vorzugsweise quer zur Längserstreckung ihrer zumindest einen Führungsschiene (7, 8) verschiebbar ist, und/oder dass in zumindest einer Relativstellung von Zwischenablage (6) und Werkzeugspeicher (3) eine durchgängige Führung aus einer Führungsschiene (4, 5) des Werkzeugspeichers (3), einer Führungsschiene (6, 7) der Zwischenablage (6) und der als Führungsschiene (21) ausgebildeten Werkzeughalterung der Biegepresse (20) gebildet wird, und/oder dass sich der Bewegungsraum der ersten Transfereinrichtung (11) über die Führungsschiene (4, 5) des Werkzeugspeichers (3), die Führungsschiene (7, 8) der Zwischenablage (6) und die als Füh-rungsschiene (21) ausgebildete Werkzeughalterung der Biegepresse (20) erstreckt.

20. Verfahren zum Beschicken einer Biegepresse (20) mit zumindest einem ersten Biegewerkzeug (1) aus einem Werkzeugspeicher (3) einer Beschickungsvorrichtung (10) nach einem der Ansprüche 1 bis 16, wobei der Werkzeugspeicher (3) zumindest zwei Führungsschienen (4, 5) zum Halten und Führen von Biegewerkzeugen (1, 2) und die Biegepresse (20) zumindest eine als Führungsschiene (21) ausgebildete Werkzeughalterung umfasst, **dadurch gekennzeichnet, dass** das zumindest eine erste Biegewerkzeug (1) zusammen mit zumindest einem zweiten Biegewerkzeug (2) in einer ersten Führungsschiene (4) des Werkzeugspeichers (3) in einer Reihe angeordnet ist und dass das erste Biegewerkzeug (1) von dem zumindest einen zweiten Biegewerkzeug (2) mittels eines Rangiermanövers durch Verschieben entlang von Führungsschienen (4, 5, 7, 8, 21) getrennt wird, wobei vorzugsweise das Rangiermanöver mit zumindest einer entlang der Führungsschienen (4, 5, 7, 8, 21) verfahrbaren Transfereinrichtung (11, 12) erfolgt, wobei vorzugsweise die Transfereinrichtung in den Führungsschienen geführt ist.

21. Verfahren nach Anspruch 20, **dadurch gekennzeichnet, dass** das Rangiermanöver die Schritte:
(a) Verschieben zumindest eines Biegewerkzeuges (1, 2) von der ersten Führungsschiene (4) des Werkzeugspeichers (3) auf eine Führungsschiene (7, 8) einer Zwischenablage (6) und
(b) Relativbewegung zwischen Werkzeugspeicher (3) und Zwischenablage (6) umfasst, wobei vorzugsweise Schritt (a) nach einem Schritt (b) zumindest einmal wiederholt wird und/oder Schritt (b) nach einem Schritt (a) zumindest einmal wiederholt wird.

22. Verfahren nach Anspruch 21, **dadurch gekennzeichnet, dass** im Schritt (a) die in der ersten Führungsschiene (4) des Werkzeugspeichers (3) angeordneten Biegewerkzeuge (1, 2) in Richtung Zwischenablage (6) verschoben werden, bis das/die vor dem zumindest einen ersten Biegewerkzeug (1) angeordneten zweite(n) Biegewerkzeug(e) (2) in der Führungsschiene (7, 8) der Zwischenablage (6) ist/sind, und dass nach dem Schritt (b) das zumindest eine erste Biegewerkzeug (1) in einem Schritt (c) von der ersten Führungsschiene (4) des Werkzeugspeichers (3) in eine Führungsschiene (7, 8) der Zwischenablage (6) verschoben wird, wobei vorzugsweise zwischen dem Schritt (b) und dem Schritt (c) das/die in der Zwischenablage (6) zwischengelagerte(n) zweite(n) Biegewerkzeug(e) (2) in zumindest eine zweite Führungsschiene (5) des Werkzeugspeichers (3) verschoben werden.

23. Verfahren nach Anspruch 21 oder 22, **dadurch gekennzeichnet, dass** im Schritt (a) das/die zweite(n) Biegewerkzeug(e) (2) in eine erste Führungsschiene (7) der Zwischenablage (6) verschoben werden und im Schritt (c) das zumindest eine erste Biegewerkzeug (1) in eine zweite Führungsschiene (8) der Zwischenablage (6) verschoben wird.

24. Verfahren nach einem der Ansprüche 21 bis 23, **dadurch gekennzeichnet, dass** das Rangiermanöver den Schritt umfasst: (d) Verschieben des/der zweiten Biegewerkzeuge(s) (2), das/die hinter dem zumindest einen ersten Biegewerkzeug (1) angeordnet ist/sind, in die erste Führungsschiene (7) der Zwischenablage (6), vorzugsweise bevor das zumindest eine erste Biegewerkzeug (1) in die Werkzeughalterung der Biegepresse (20) verschoben wird.

25. Verfahren nach einem der Ansprüche 21 bis 24, **dadurch gekennzeichnet, dass** durch Schritt (b) die Führungsschiene (7, 8) der Zwischenablage (6) in fluchtende Ausrichtung mit einer anderen Führungsschiene (4, 5) des Werkzeugspeichers (3) gelangt und/oder dass durch Schritt (b) eine zweite Führungsschiene (8) der Zwischenablage (6) in fluchtende Ausrichtung mit der ersten Führungsschiene (4) des Werkzeugspeichers (3) gelangt.

26. Verfahren nach einem der Ansprüche 20 bis 25, **dadurch gekennzeichnet, dass** während des Verschiebens des zumindest einen ersten Biegewerkzeuges (1) in die Werkzeughalterung der Biegepresse (20) eine durchgängige Führung aus einer Führungsschiene (4, 5) des Werkzeugspeichers (3), einer Führungsschiene (7, 8) der Zwischenablage (6) und der als Führungsschiene (21) ausgebildeten Werkzeughalterung der Biegepresse (20) gebildet wird und/oder dass mehrere Biegewerkzeuge durch Rangiervorgänge in einer vorgegebenen Reihenfolge in einer Führungsschiene (7, 8) einer Zwischenablage (6), die relativ zum Werkzeugspeicher (3) bewegbar ist, zusammengestellt werden, bevor sie in die Werkzeughalterung der Biegepresse (20) geschoben werden.

27. Verfahren nach einem der Ansprüche 21 bis 26, **dadurch gekennzeichnet, dass** das Rangiermanöver
einen Schritt (e): Verschieben zumindest eines Biegewerkzeuges (1, 2) von einer Führungsschiene (4) des Werkzeugspeichers (3) oder von einer Führungsschiene (7) der Zwischenablage (6) auf eine Führungsschiene (7') einer weiteren Zwischenablage (6');
und/oder einen Schritt (f): Verschieben zumindest eines Biegewerkzeuges (1, 2) von einer Führungsschiene einer Zwischenablage (6, 6') durch eine Führungsschiene (4) des Werkzeugspeichers (3) auf eine Führungsschiene (7, 8) einer anderen Zwischenablage (6', 6); und/oder einen Schritt (g): Drehen der Zwischenablage (6, 6') um eine Drehachse (27), vorzugsweise um 180°;
umfasst.

## Claims

1. A loading device (10), in particular a changing device, for loading a bending press (20) with bending tools (1) and/or for changing one or multiple bending tools inserted in a bending press (20), comprising a tool storage (3) with at least two, preferably a plurality of guide rails (4, 5) for holding and guiding bending tools (1, 2) and at least one first transfer device (11) for displacing the bending tools (1, 2) along a guide rail (4, 5, 7, 8, 21), **characterized by** an intermediate store (6) with at least one guide rail (7, 8) for holding and guiding bending tools (1, 2), wherein the tool storage (3) and the intermediate store (6) can be moved relative to one another and wherein at least one guide rail (7, 8) of the intermediate store can be in aligning orientation with another guide rail (4, 5) of the tool storage (3) in different relative positions of the tool storage (3) and the intermediate storage (6), further **characterized in**
**that**, to realize a relative movement between the tool storage (3) and the intermediate store (6), the intermediate store (6), preferably also the tool storage (3), is/are configured so as to be movable,
and/or
**that** the guide rails (4, 5) of the tool storage (3) and/or guide rails (7, 8) of the intermediate store (6) run in parallel.

2. The loading device according to claim 1, **characterized in that** the intermediate store (6) comprises at least two guide rails (7, 8) for holding and guiding bending tools (1, 2), wherein preferably a guide rail (4, 5) of the tool storage (3) is in aligning orientation with another guide rail (7, 8) of the intermediate store (6) in different relative positions of the tool storage (3) and the intermediate store (6).

3. The loading device according to claim 1 or 2, **characterized in that** the guide rails (4, 5) of the tool storage (3) and/or the guide rails of the intermediate store (6) are arranged along a circular arc or a circular line and running in radial direction.

4. The loading device according to one of the preceding claims, **characterized in that** the intermediate store (6) is displaceable relative to the tool storage (3) transversely to the longitudinal extension of its at least one guide rail (7, 8) and/or that the intermediate store (6) is movable relative to the tool storage (3) along a circular or partially circular path.

5. The loading device according to one of the preceding claims, **characterized in that** the tool storage (3) is rotatable relative to the intermediate store (6) about a rotation axis, which is perpendicular to the plane spanned by the at least two guide rails (4, 5) of the tool storage (3).

6. The loading device according to one of the preceding claims, **characterized in that** the loading device (10) comprises at least one second transfer device (12) for displacing bending tools (1, 2), wherein the second transfer device (12) is assigned to the intermediate store (6) and is preferably integrated in the intermediate store (6), wherein preferably the movement space of the second transfer device (12) is limited to the region of the intermediate store (6).

7. The loading device according to claim 6, **characterized in that** the second transfer device (12) comprises an accumulator drive (13), in particular a spring or cylinder accumulator drive, which preferably can be loaded by displacing a bending tool (1, 2) from a guide rail (4, 5) of the tool storage into a guide rail (7, 8) of the intermediate store (6), and/or in that the second transfer device (12) has an active drive.

8. The loading device according to one of the preceding claims, **characterized in that** at least one guide rail (4, 5) of the tool storage (3) holds at least two, preferably a plurality of bending tools (1, 2) arranged in a row.

9. The loading device according to one of the preceding claims, **characterized in that** the loading device (10) comprises a controller (16), which is connected to the drive (17) of the first transfer device (11) and to a drive (22) for relative movement of the tool storage (3) and the intermediate store (6), and which is configured to control a loading operation in which a bending press (20) is loaded with at least one first bending tool (1) from the tool storage (3), wherein the at least one first bending tool (1) is arranged in a row with at least one second bending tool (2) in a first guide rail (4) of the tool storage (3) and wherein the first bending tool (1) is separated from the at least one second bending tool (2) by means of a shunting maneuver by displacement along guide rails (4, 5, 7, 8, 21).

10. The loading device according to one of the preceding claims, **characterized in that** the movement space of the first transfer device (11) extends across at least one guide rail (4, 5) of the tool storage (3) and at least one guide rail (7, 8) of the intermediate store (6).

11. The loading device according to one of the preceding claims, **characterized in that** the first transfer device (11) comprises a shuttle (19), which is displaceable along at least one guide rail (4, 5, 6, 7, 21), preferably guided in the guide rail (4, 5, 6, 7, 21), and preferably connected via a longitudinal traction and/or pressure transfer means (18) to a drive (17), wherein preferably the shuttle (19) is configured so as to be self-driving.

12. The loading device according to one of the preceding claims, **characterized by** at least one further intermediate store (6') with at least one guide rail (7') for holding and guiding bending tools (1, 2), wherein preferably the tool storage (3) and the at least one further intermediate store (6') are movable relative to one another and at least one guide rail (7') of the further intermediate store (6') is in aligning orientation with another guide rail (4, 5) of the tool storage (3) in different relative positions of the tool storage (3) and the further intermediate store (6').

13. The loading device according to claim 12, **characterized in that** at least one section of the tool storage (3) is arranged between the intermediate stores (6, 6') and/or that in at least one relative position of the tool storage (3) and the intermediate stores (6, 6'), a continuous guiding section is formed by a guide rail (7) of an intermediate store (6), a guide rail (4) of the tool storage (3) and a guide rail (7') of another intermediate store (6').

14. The loading device according to one of the preceding claims, **characterized in that** the tool storage (3) is annular and the intermediate store (6, 6') is arranged in the region enclosed by the annular tool storage (3) and/or that the intermediate store (6, 6') is lowerable or raisable, in particular from the common plane with the tool storage (3).

15. The loading device according to one of the preceding claims, **characterized in that** an intermediate store (6, 6') or a guide rail of the intermediate store (6, 6') is rotatable about a rotation axis (27), wherein preferably, in a first rotational position of the intermediate store (6, 6'), the one end of a guide rail (7, 7') of the intermediate store (6, 6') adjoins the tool storage (3) and, in a second rotational position of the intermediate store (6, 6'), the other end of the guide rail (7, 7') of the intermediate store (6, 6') adjoins the tool storage (3).

16. The loading device according to one of the preceding claims, **characterized in that** the intermediate store (6, 6') comprises a rotation unit (28) or cooperates with a rotation unit (28), by which the intermediate store (6, 6') as a whole or a guide rail (7, 7') of the intermediate store (6, 6') can be rotated, preferably about an axis perpendicular to a longitudinal extension of a guide rail (7, 7') of the intermediate store (6, 6').

17. An arrangement of a bending press (20) and a loading device (10) coupled thereto for loading the bending press (20) with bending tools (1, 2), wherein the bending press (20) comprises a tool mount for holding and guiding bending tools (1, 2) which is embodied as a guide rail (21), **characterized in that** the loading device (10) is embodied according to one of the preceding claims.

18. The arrangement according to claim 17, **characterized in that** the intermediate store (6) is arranged between the tool storage (3) and the bending press (20) and/or that the tool storage (3) is arranged between the bending press (20) and an intermediate store (6, 6').

19. The arrangement according to claim 17 or 18, **characterized in that** the intermediate store (6) is movable relative to the tool mount of the bending press (20), preferably displaceable transversely to the longitudinal extension of its at least one guide rail (7, 8), and/or that, in at least one relative position of the intermediate store (6) and the tool storage (3), a continuous guide is formed of a guide rail (4, 5) of the tool storage (3), a guide rail (6, 7) of the intermediate store (6) and the tool mount of the bending press (20), which tool mount is embodied as a guide rail (21), and/or that the movement space of the first transfer device (11) extends over the guide rail (4, 5) of the tool storage (3), the guide rail (7, 8) of the intermediate store (6) and the tool mount of the bending press (20), which is embodied as a guide rail (21).

20. A method for loading a bending press (20) with at least one first bending tool (1) from a tool storage (3) of a loading device (10) according to one of claims 1 to 16, wherein the tool storage (3) comprises at least two guide rails (4, 5) for holding an guiding bending tools (1, 2) and the bending press (20) comprises at least one tool mount embodied as the guide rail (21), **characterized in that** the at least one first bending tool (1) is arranged in a row with the at least one second bending tool (2) in a first guide rail (4) of the tool storage (3) and that the first bending tool (1) is separated from the at least one second bending tool (2) by means of a shunting maneuver by displacement along guide rails (4, 5, 7, 8, 21), wherein preferably the shunting maneuver is performed with at least one transfer device (11, 12) displaceable along the guide rails (4, 5, 7, 8, 21), wherein preferably the transfer device is guided in the guide rails.

21. The method according to claim 20, **characterized in that** the shunting maneuver comprises the steps:
(a) displacing at least one bending tool (1, 2) from the first guide rail (4) of the tool storage (3) to a guide rail (7, 8) of an intermediate store (6), and
(b) relative movement between the tool storage (3) and the intermediate store (6), wherein preferably step (a) is repeated at least once after a step (b) and/or step (b) is repeated at least once after a step (a).

22. The method according to claim 21, **characterized in that** in step (a) the bending tools (1, 2) arranged in the first guide rail (4) of the tool storage (3) are displaced in the direction of the intermediate store (6) until the second bending tool(s) (2) arranged in front of the at least one first bending tool (1) is/are in the guide rail (7, 8) of the intermediate store (6), and that, after step (b), the at least one first bending tool (1) is displaced in a step (c) from the first guide rail (4) of the tool storage (3) into a guide rail (7, 8) of the intermediate store (6), wherein preferably, between step (b) and step (c), the second bending tool(s) (2) temporarily stored in the intermediate store (6) is/are displaced into at least one second guide rail (5) of the tool storage (3).

23. The method according to claim 21 or 22, **characterized in that** in step (a) the second bending tool(s) (2) is/are displaced into a first guide rail (7) of the intermediate store (6) and in step (c) the at least one first bending tool (1) is displaced into a second guide rail (8) of the intermediate store (6).

24. The method according to one of claims 21 to 23, **characterized in that** the shunting maneuver comprises the step: (d) displacing the second bending tool(s) (2), which is/are arranged behind the at least one first bending tool (1), into the first guide rail (7) of the intermediate store (6), preferably before the at least one first bending tool (1) is displaced into the tool mount of the bending press (20).

25. The method according to one of claims 21 to 24, **characterized in that** by step (b) the guide rail (7, 8) of the intermediate store (6) reaches aligning orientation with another guide rail (4, 5) of the tool storage (3) and/or that by step (b) a second guide rail (8) of the intermediate store (6) reaches aligning orientation with the first guide rail (4) of the tool storage (3).

26. The method according to one of claims 20 to 25, **characterized in that** during the displacement of the at least one first bending tool (1) into the tool mount of the bending press (20) a continuous guide is formed of a guide rail (4, 5) of the tool storage (3), a guide rail (7, 8) of the intermediate store (6) and the tool mount of the bending press (20), which is embodied as a guide rail (21), and/or that multiple bending tools are assembled by shunting operations in a predetermined order in a guide rail (7, 8) of an intermediate store (6), which can be moved relative to the tool storage (3), before they are pushed into the tool mount of the bending press (20).

27. The method according to one of claims 21 to 26, **characterized in that** the shunting maneuver comprises
a step (e): displacing at least one bending tool (1, 2) from a guide rail (4) of the tool storage (3) or from a guide rail (7) of the intermediate store (6) to a guide rail (7') of a further intermediate store (6');
and/or a step (f): displacing at least one bending tool (1, 2) from a guide rail of an intermediate store (6, 6') through a guide rail (4) of the tool storage (3) to a guide rail (7, 8) of another intermediate store (6', 6);
and/or a step (g): rotating the intermediate store (6, 6') about a rotation axis (27), preferably by 180°.

## Revendications

1. Dispositif d'alimentation (10), plus particulièrement dispositif de changement, pour l'alimentation d'une presse plieuse (20) avec des outils de pliage (1) et/ou pour le changement d'un ou plusieurs outils de pliage insérés dans une presse plieuse (20), comprenant un magasin d'outils (3) avec au moins deux, de préférence une pluralité de rails de guidage (4, 5) pour le maintien et le guidage d'outils de pliage (1, 2) et au moins un premier dispositif de transfert (11) pour le déplacement des outils de pliage (1, 2) le long d'un rail de guidage (4, 5, 7, 8, 21), **caractérisé par** un dépôt intermédiaire (6) zvec au moins un rail de guidage (7, 8) pour le maintien et le guidage d'outils de pliage (1, 2), dans lequel le magasin d'outils (3) et le dépôt intermédiaire (6) sont mobiles l'un par rapport à l'autre et dans lequel au moins un rail de guidage (7, 8) du dépôt intermédiaire peut être aligné, dans différentes positions relatives du magasin d'outils (3) et du dépôt intermédiaire (6), respectivement avec un autre rail de guidage (4, 5) du magasin d'outils (3), **caractérisé en outre en ce que**,
pour la réalisation d'un mouvement relatif entre le magasin d'outils (3) et le dépôt intermédiaire (6), le dépôt intermédiaire (6), de préférence également le magasin d'outils (3), est/sont conçu(s) de manière mobile,
et/ou
les rails de guidage (4, 5) du magasin d'outils (3) et/ou les rails de guidage (7, 8) du dépôt intermédiaire (6) s'étendent parallèlement entre eux.

2. Dispositif d'alimentation selon la revendication 1, **caractérisé en ce que** le dépôt intermédiaire (6) comprend au moins deux rails de guidage (7, 8) pour le maintien et le guidage d'outils de pliage (1, 2), dans lequel, de préférence, un rail de guidage (4, 5) du magasin d'outils (3) est aligné, dans différentes positions relatives du magasin d'outils (3) et du dépôt intermédiaire (6), respectivement avec un autre rail de guidage (7, 8) du dépôt intermédiaire (6).

3. Dispositif d'alimentation selon la revendication 1 ou 2, **caractérisé en ce que** les rails de guidage (4, 5) du magasin d'outils (3) et/ou les rails de guidage du dépôt intermédiaire (6) sont disposés de façon à s'étendre le long d'un arc de cercle ou d'une ligne circulaire dans la direction radiale.

4. Dispositif d'alimentation selon l'une des revendications précédentes, **caractérisé en ce que** le dépôt intermédiaire (6) peut être déplacé par rapport au magasin d'outils (3) transversalement par rapport à l'extension longitudinale de son au moins un rail de guidage (7, 8) et/ou **en ce que** le dépôt intermédiaire (6) peut être déplacé par rapport au magasin d'outils (3) le long d'une trajectoire circulaire ou partiellement circulaire.

5. Dispositif d'alimentation selon l'une des revendications précédentes, **caractérisé en ce que** le magasin d'outils (3) est rotatif par rapport au dépôt intermédiaire (6) autour d'un axe de rotation qui est perpendiculaire par rapport plan défini par les au moins deux rails de guidage (4, 5) du magasin d'outils (3).

6. Dispositif d'alimentation selon l'une des revendications précédentes, **caractérisé en ce que** le dispositif d'alimentation (10) comprend au moins un deuxième dispositif de transfert (12) pour le déplacement d'outils de pliage (1, 2), dans lequel le deuxième dispositif de transfert (12) correspond au dépôt intermédiaire (6) et est, de préférence, intégré dans le dépôt intermédiaire (6), dans lequel, de préférence, la zone de déplacement du deuxième dispositif de transfert (12) est limitée à la zone du dépôt intermédiaire (6).

7. Dispositif d'alimentation selon la revendication 6, **caractérisé en ce que** le deuxième dispositif de transfert (12) comprend un entraînement de magasin (13), plus particulièrement un entraînement de magasin à ressort ou à cylindre, qui peut, de préférence, être sollicité par le déplacement d'un outil de pliage (1, 2) d'un rail de guidage (4, 5) du magasin d'outils vers un rail de guidage (7, 8) du dépôt intermédiaire (6) et/ou **en ce que** le deuxième dispositif de transfert (12) comprend un entraînement actif.

8. Dispositif d'alimentation selon l'une des revendications précédentes, **caractérisé en ce qu'**au moins un rail de guidage (4, 5) du magasin d'outils (3) maintient au moins deux, de préférence une pluralité d'outils de pliage (1, 2) disposés sur une rangée.

9. Dispositif d'alimentation selon l'une des revendications précédentes, **caractérisé en ce que** le dispositif d'alimentation (10) comprend un dispositif de commande (16) qui est relié avec l'entraînement (17) du premier dispositif de transfert (11) et avec un entraînement (22) pour le déplacement relatif du magasin d'outils (3) et du dépôt intermédiaire (6) et est conçu pour contrôler un processus d'alimentation dans lequel une presse plieuse (20) avec au moins un premier outil de pliage (1) est alimenté à partir du magasin d'outils (3), dans lequel l'au moins un premier outil de pliage (1) est disposé sur une rangée avec au moins un deuxième outil de pliage (2) dans un premier rail de guidage (4) du magasin d'outils (3) et dans lequel le premier outil de pliage (1) est séparé de l'au moins un deuxième outil de pliage (2) au moyen d'une manœuvre de rangement par le déplacement le long de rails de guidage (4, 5, 7, 8, 21).

10. Dispositif d'alimentation selon l'une des revendications précédentes, **caractérisé en ce que** la zone de déplacement du premier dispositif de transfert (11) s'étend sur au moins un rail de guidage (4, 5) du magasin d'outils (3) et au moins un rail de guidage (7, 8) du dépôt intermédiaire (6).

11. Dispositif d'alimentation selon l'une des revendications précédentes, **caractérisé en ce que** le premier dispositif de transfert (11) comprend une navette (19) mobile le long d'au moins un rail de guidage (4, 5, 6, 7, 21), de préférence guidée dans le rail de guidage (4, 5, 6, 7, 21), qui est reliée avec un entraînement (17), de préférence par l'intermédiaire d'un moyen de transmission de traction et/ou de pression allongé (18), dans lequel, de préférence la navette (19) est conçue de façon à être autopropulsée.

12. Dispositif d'alimentation selon l'une des revendications précédentes, **caractérisé par** au moins un autre dépôt intermédiaire (6') avec au moins un rail de guidage (7') pour le maintien et le guidage d'outils de pliage (1, 2), dans lequel de préférence, le magasin d'outils (3) et l'au moins un autre dépôt intermédiaire (6') sont mobiles l'un par rapport à l'autre et au moins un rail de guidage (7') de l'autre dépôt intermédiaire (6') est aligné, dans différentes positions relatives du magasin d'outils (3) et de l'autre dépôt intermédiaire (6'), respectivement avec un autre rail de guidage (4, 5) du magasin d'outils (3).

13. Dispositif d'alimentation selon la revendication 12, **caractérisé en ce qu'**au moins une portion du magasin d'outils (3) est disposée entre les dépôts intermédiaires (6, 6') et/ou **en ce que**, dans au moins une position relative du magasin d'outils (3) et des dépôts intermédiaires (6, 6'), une portion de guidage traversante soit formée par un rail de guidage (7) d'un dépôt intermédiaire (6), un rail de guidage du magasin d'outils (3) et un rail de guidage (7') d'un autre dépôt intermédiaire (6').

14. Dispositif d'alimentation selon l'une des revendications précédentes, **caractérisé en ce que** le magasin d'outils (3) présente une forme annulaire et le dépôt intermédiaire (6, 6') est disposé dans la zone entourée par le magasin d'outils (3) annulaire et/ou **en ce que** le dépôt intermédiaire (6, 6') peut être abaissé ou soulevé, plus particulièrement à partir du plan commun avec le magasin d'outils (3).

15. Dispositif d'alimentation selon l'une des revendications précédentes, **caractérisé en ce qu'**un dépôt intermédiaire (6, 6') ou un rail de guidage du dépôt intermédiaire (6, 6') est rotatif autour d'un axe de rotation (27), dans lequel, de préférence dans une première position de rotation du dépôt intermédiaire (6, 6'), une extrémité d'un rail de guidage (7, 7') du dépôt intermédiaire (6, 6') est adjacente au magasin d'outils (3) et, dans une deuxième position de rotation du dépôt intermédiaire (6, 6'), l'autre extrémité du rail de guidage (7, 7') du dépôt intermédiaire (6, 6') est adjacentes au magasin d'outils (3).

16. Dispositif d'alimentation selon l'une des revendications précédentes, **caractérisé en ce que** le dépôt intermédiaire (6, 6') comprend une unité de rotation (28) ou interagit avec une unité de rotation (28) grâce à laquelle le dépôt intermédiaire (6, 6') dans son ensemble ou un rail de guidage (7, 7') du dépôt intermédiaire (6, 6') peut tourner, de préférence autour d'un axe perpendiculaire à l'extension longitudinale d'un rail de guidage (7, 7') du dépôt intermédiaire (6, 6').

17. Disposition d'une presse plieuse (20) et d'un dispositif d'alimentation (10) qui y est couplée, pour l'alimentation d'une presse plieuse (20) avec des outils de pliage (1, 2), dans lequel la presse plieuse (20) comprend un porte-outil conçu comme un rail de guidage (21), pour le maintien et le guidage d'outils de pliage (1, 2), **caractérisée en ce que** le dispositif d'alimentation (10) est conçu selon l'une des revendications précédentes.

18. Disposition selon la revendication 17, **caractérisée en ce que** le dépôt intermédiaire (6) est disposé entre le magasin d'outils (3) et la presse plieuse (20) et/ou **en ce que** le magasin d'outils (3) est disposé entre la presse plieuse (20) et un dépôt intermédiaire (6, 6').

19. Disposition selon la revendication 17 ou 18, **caractérisée en ce que** le dépôt intermédiaire (6) est mobile par rapport au porte-outil de la presse plieuse (20), de préférence coulissante transversalement par rapport à l'extension longitudinale de son au moins un rail de guidage (7, 8) et/ou **en ce que**, dans au moins un position relative du dépôt intermédiaire (6) et du magasin d'outils (3), un guidage traversant est constitué d'un rail de guidage (4, 5) du magasin d'outils (3), d'un rail de guidage (6, 7) du dépôt intermédiaire (6) et du porte-outil, conçu comme un rail de guidage (21), de la presse plieuse (20) et/ou **en ce que** la zone de déplacement du premier dispositif de transfert (11) s'étend sur le rail de guidage (4, 5) du magasin d'outils (3), le rail de guidage (7, 8) du dépôt intermédiaire (6) et le porte-outil, conçu comme un rail de guidage (21), de la presse plieuse (20).

20. Procédé d'alimentation d'une presse plieuse (20) avec au moins un premier outil de pliage (1) à partir d'un magasin d'outils (3) d'un dispositif d'alimentation (10) selon l'une des revendications 1 à 16, dans lequel le magasin d'outils (3) comprend au moins deux rails de guidage (4, 5) pour le maintien et le guidage d'outils de pliage (1, 2) et la presse plieuse (20) comprend au moins un porte-outil conçu comme un rail de guidage (21), **caractérisé en ce que** l'au moins un premier outil de pliage (1) est disposé sur une rangée avec au moins un deuxième outil de pliage (2), dans un premier rail de guidage (4) du magasin d'outils (3) et **en ce que** le premier outil de pliage (1) est séparé de l'au moins un deuxième outil de pliage (2) au moyen d'une manœuvre de rangement par coulissement le long de rails de guidage (4, 5, 7, 8, 21), dans lequel, de préférence, la manœuvre de rangement a lieu avec au moins un dispositif de transfert (11, 12) mobile le long des rails de guidage (4, 5, 7, 8, 21), dans lequel, de préférence, le dispositif de transfert est guidé dans les rails de guidage.

21. Procédé selon la revendication 20, **caractérisé en ce que** la manœuvre de rangement comprend les étapes suivantes :
(a) coulissement d'au moins un outil de pliage (1, 2) du premier rail de guidage (4) du magasin d'outils (3) vers un rail de guidage (7, 8) du dépôt intermédiaire (6) et
(b) déplacement relatif entre le magasin d'outils (3) et le dépôt intermédiaire (6) dans lequel, de préférence, l'étape (a) est répétée au moins une fois après une étape (b) et/ou l'étape (b) est répétée au moins une fois après une étape (a).

22. Procédé selon la revendication 21, **caractérisé en ce que**, à l'étape (a), les outils de pliage (1, 2) disposés dans le premier rail de guidage (4) du magasin d'outils (3) sont déplacés entre direction du dépôt intermédiaire (6) jusqu'à ce que le(s) deuxième(s) outil(s) de pliage (2) disposé(s) avant l'au moins un premier outil de pliage (1) soi(en)t dans le rail de guidage (7, 8) du dépôt intermédiaire (6) et **en ce que**, après l'étape (b), l'au moins un premier outil de pliage (1), dans une étape (c), est déplacé du premier rail de guidage (4) du magasin d'outils (3) vers un rail de guidage (7, 8) du dépôt intermédiaire (6), dans lequel, de préférence, entre l'étape (b) et l'étape (c), le(s) deuxième(s) outil(s) de pliage (2) entreposés dans le dépôt intermédiaire (6) sont déplacés vers au moins un deuxième rail de guidage (5) du magasin d'outils (3).

23. Procédé selon la revendication 21 ou 22, **caractérisé en ce que**, dans l'étape (a), le(s) deuxième(s) outil(s) de pliage (2) sont déplacés vers un premier rail de guidage (7) du dépôt intermédiaire (6) et, dans l'étape (c), l'au moins un premier outil de pliage (1) est déplacé vers un deuxième rail de guidage (8) du dépôt intermédiaire (6).

24. Procédé selon l'une des revendications 21 à 23, **caractérisé en ce que** la manœuvre de rangement comprend l'étape suivante : (d) déplacement de l'outil / des outils de pliage (2) qui est/sont disposé(s) derrière l'au moins un premier outil de pliage (1) vers le premier rail de guidage (7) du dépôt intermédiaire (6), de préférence avant que l'au moins un premier outil de pliage (1) soit déplacé vers le porte-outil de la presse plieuse (20).

25. Procédé selon l'une des revendications 21 à 24, **caractérisé en ce que**, grâce à l'étape (b), le rail de guidage (7, 8) du dépôt intermédiaire (6) est aligné avec un autre rail de guidage (4, 5) du magasin d'outils (3) et/ou, grâce à l'étape (b), un deuxième rail de guidage (8) du dépôt intermédiaire (6) est aligné avec le premier rail de guidage (4) du magasin d'outils (3).

26. Procédé selon l'une des revendications 20 à 25, **caractérisé en ce que**, pendant le déplacement de l'au moins un premier outil de pliage (1) vers le porte-outil de la presse plieuse (20), un guidage traversant est constitué à partir d'un rail de guidage (4, 5) du magasin d'outils (3), d'un rail de guidage (7, 8) du dépôt intermédiaire (6) et du porte-outil, conçu comme un rail de guidage (21), de la presse plieuse (20) et/ou **en ce que** plusieurs outils de pliage sont regroupés, par des processus de rangement, dans un ordre prédéterminé, dans un rail de guidage (7, 8) d'un dépôt intermédiaire (6) qui est mobile par rapport au magasin d'outils (3), avant d'être poussés dans le porte-outil de la presse plieuse (20).

27. Procédé selon l'une des revendications 21 à 26, **caractérisé en ce que** la manœuvre de rangement comprend
une étape (e) : déplacement d'au moins un outil de pliage (1, 2) d'un rail de guidage (4) du magasin d'outils (3) ou d'un rail de guidage (7) du dépôt intermédiaire (6) vers un rail de guidage (7') d'un autre dépôt intermédiaire (6') ;
et/ou une étape (f) : déplacement d'au moins un outil de pliage (1, 2) d'un rail de guidage d'un dépôt intermédiaire (6, 6') à travers un rail de guidage (4) du magasin d'outils (3) vers un rail de guidage (7, 8) d'un autre dépôt intermédiaire (6', 6) ;
et/ou une étape (g) : rotation du dépôt intermédiaire (6, 6') autour d'un axe de rotation (27), de préférence sur 180°.
